# EUROPEAN PATENT SPECIFICATION

(11) **EP 0 784 204 B1**
(45) Date of publication and mention of the grant of the patent: **13.08.2003**
(21) Application number: 96402853.4
(22) Date of filing: 20.12.1996
(51) Int. Cl.: G01N 35/10

(54) **Liquid sampling valve**
Ventil für flüssige Proben
Valve d'échantillonnage des liquides

(30) Priority: 21.12.1995 JP 33368695; 21.12.1995 JP 33368795; 21.12.1995 JP 33368895
(43) Date of publication of application: 16.07.1997
(73) Proprietor: Sysmex Corporation, Hyogo (JP)
(72) Inventor: Kimura, Rokusaburo, Kobe-shi, Hyogo (JP); Kitagawa, Nobuhiro, Nishi-ku, Kobe-shi, Hyogo (JP)
(74) Representative: Orès, Bernard

(56) References cited:
- EP-A- 0 543 544
- EP-A- 0 545 560
- EP-A- 0 611 961
- US-A- 4 726 237

## Description

### BACKGROUND OF THE INVENTION

The present invention relates to a liquid sampling valve for extracting a predetermined quantity of liquid sample like blood. More particularly, the present invention relates to a liquid sampling valve intended for low costs and long-term stability of the operation (a property of preventing the generation of inconveniences such as liquid leakage and sticking for a long period of time).

Sampling of liquid sample in an analyzer such as hemocyte counting apparatus has been conducted by extracting a predetermined quantity of sample with a liquid sampling valve. A liquid sample injection and a liquid sampling valve have already been described respectively in US-A-5,207,109 and EP-A-0 543 544.

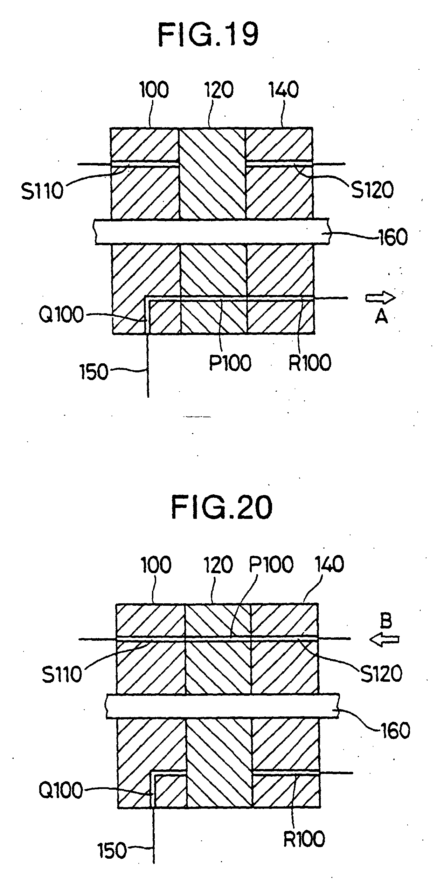

Referring to Fig. 19 and 20, a brief description will be given on the construction and the operation of conventional liquid sampling valves for general use. Typically, these liquid sampling valve include two disk-like fixed elements 100, 140 disposed in a fixed manner, a disk-like movable element 120 rotatable and coaxially interposed between the two fixed elements 100, 140, and a shaft 160 inserted in a through-bore disposed at a central portion of each of the three elements 100, 140, 120.

A sample inlet passageway Q100 and a sample dilution/transfer passageway S110 are provided through the fixed element 100. A sample outlet passageway R100 and a sample dilution/transfer passageway S120 are provided through the fixed element 140. A sample measuring passageway P100 is provided through the movable element 120.

Figs. 19 and 20 show two states of the liquid sampling valve. Referring to Fig. 19, the sample liquid flows in the direction show by arrow A, namely from a pipette 150 located outside the liquid sampling valve through the passageway Q100, the passageway P100, and the passageway R100 to fill the passageway P100 of the movable element 120 (referred to as a first state). The movable element 120 rotates from the first state to a state shown in Fig. 20 (referred to as a second state). The sample liquid having filled the measuring passageway P100 in the first state is transferred through the passageway S110 to outside of the liquid sampling valve by a predetermined quantity of diluent solution introduced into the passageway S120 in the direction shown by arrow B so that the sample liquid may be diluted at a predetermined ratio.

As shown above, conventional liquid sampling valves include a through-bore for a shaft at a central portion of each of the three elements 100, 140, 120 so that the shaft 160 may be inserted through these three through-bores.

Therefore, it has not been possible to provide, at the central portion of the elements 100, 140, 120, various passageways such as the sample inlet passageway Q100, the sample dilution/transfer passageway S110, the sample outlet passageway R100, the sample dilution/transfer passageway S120, and the sample measuring passageway P100, so that it has been difficult to lower the price of sampling valves by reducing the size of the elements 100, 140, 120.

Moreover, along with an increase in the frequency of usage, the sample liquid or the diluent solution may leak out from the various passageways Q100, S110, R100, S120, P100 to the contact surfaces of the fixed elements 100, 140 and the movable element 120, or the movable element 120 may be stuck to the fixed elements 100, 140 or the shaft 160 because of, for example, the coagulation of the leaked sample liquid, making it difficult to ensure a long-term stability of the operation.

Since a through-bore for a shaft is provided at a central portion of each of the three elements 100, 140, 120, there is a fear that the leaked sample liquid or the diluent solution may move to a peripheral portion of the three elements 100, 140, 120 to flow to outside thereof or may move to a central portion to flow into the through-bore for a shaft. Further, the sticking of the elements may occur not only at the peripheral portion of the three elements 100, 140, 120 but also at the central portion thereof.

Therefore, it has been necessary to perform a cleaning Operation or the like on not only the peripheral portion of the three elements 100, 140, 120 but also the central portion thereof as the measures against the liquid leakage and the sticking, so that the structure, the size, and the like of the elements 100, 140, 120 had to be taken into account.

The present invention has been made in view of the above circumstances and the purpose thereof is to provide a liquid sampling valve which can reduce the price, ensure the long-term stability of the operation, and alleviate the measures to be taken against the liquid leakage and the sticking.

### SUMMARY OF THE INVENTION

Accordingly, the present invention provides a liquid sampling valve comprising at least one fixed element having a contact surface and various liquid communication passageways; and at least one movable element having a contact surface and various liquid communication passageways, the movable element being movable in such a manner that the contact surface of the movable element is in surface contact with the contact surface of the fixed element, the various liquid communication passageways of at least one of the fixed and movable elements including a measuring passageway for extracting a predetermined quantity of a liquid sample, the fixed element and the movable element being housed and held in a housing for housing and holding the elements, and the fixed element and the movable element being pressed by a pressing member so that the elements are in close surface contact at their respective contact surfaces, characterized
in that the pressing member comprises a cap fixed to the housing and an elastic member disposed between the cap and one of the fixed elements located nearer to the cap for pressing the fixed element onto the movable element.

The liquid sampling valve of the present invention can be incorporated, for example, in a blood analyzing apparatus such as hemocyte counting apparatus, which is used for accurately extracting a predetermined quantity of blood in microliters.

The liquid sampling valve of the present invention comprises a fixed element, a movable element, a housing, and a repssing member. The fixed element has a contact surface and is fixedly housed in the housing so that the fixed element may be retated or moved. The movable element has a contact surface ande is movably housed in the housing so that the movable element may be moved (rotated or shifted) in sucha manner that the contact surface of the movable element is in surface contact with the contact surface of the fixed element. The housing houses and holds the fixed element and the movable element. The pressing member presses the fixed element and the movable element housed and held in the housing so that the elements may be in close surface contact at their respective contact surfaces.

### BRIEF DESCRIPTION OF THE DRAWINGS

Fig. 1 is an exploded perspective view showing a first state of a liquid sampling valve according to Embodiment 1 of the present invention, as viewed obliquely from an upper position.
Fig. 2 is an exploded perspective view showing three elements of the liquid sampling valve of Fig. 1, as viewed obliquely from a lower position.
Fig. 3 is a plan view showing an upper fixed element in the liquid sampling valve of Fig. 1.
Fig. 4 is a vertical cross sectional view showing the fixed element of Fig. 3, as cut through the center thereof.
Fig. 5 is a plan view showing a lower fixed element in the liquid sampling valve of Fig. 1.
Fig. 6 is a vertical cross sectional view showing the fixed element of Fig. 5, as cut through the center thereof.
Fig. 7 is a plan view showing a movable element in the liquid sampling valve of Fig. 1.
Fig. 8 is a vertical cross sectional view showing the movable element of Fig. 5, as cut through the center thereof.
Fig. 9 is a vertical cross sectional view showing the liquid sampling valve of Fig. 1, as cut through the center thereof.
Fig. 10 is an exploded perspective view showing three elements in a second state of the liquid sampling valve of Fig. 1, as viewed obliquely from an upper position.
Fig. 11 is a flow chart for explaining the sucking, transferring, and cleaning operations in the liquid sampling valve of Fig. 1.
Fig. 12 is an exploded perspective view for explaining the operation of sucking a first sample when the movable element of the liquid sampling valve of Fig. 1 is in the first state.
Fig. 13 is an exploded perspective view for explaining the operations of transferring and extracting a predetermined quantity of a first sample when the movable element of the liquid sampling valve of Fig. 1 is in the second state.
Fig. 14 is an exploded perspective view for explaining the operation of cleaning the contact surfaces of the three elements when the movable element of the liquid sampling valve of Fig. 1 is in the first state.
Fig. 15 is an exploded perspective view showing a first state of a liquid sampling valve according to Embodiment 2 of the present invention, as viewed obliquely from an upper position.
Fig. 16 is an exploded perspective view showing three elements of the liquid sampling valve of Fig. 15, as viewed obliquely from a lower position.
Fig. 17 is a vertical cross sectional view showing a pressing member of the liquid sampling valve of Fig. 15, as cut through the center thereof.
Fig. 18 is an exploded perspective view showing three elements in a second state of the liquid sampling valve of Fig. 15, as viewed obliquely from an upper position.
Fig. 19 is a vertical cross sectional view showing a first state of a conventional liquid sampling valve in which a sample liquid fills a measuring passageway, as cut through the center thereof.
Fig. 20 is a vertical cross sectional view showing a second state of the liquid sampling valve of Fig. 19 in which a sample liquid is transferred out of the liquid sampling valve and diluted at a predetermined ratio, as cut through the center thereof.

### DETAILED DESCRIPTION OF THE PREFERRED EMBODIMENTS

Both the fixed element and the movable element may be formed of, for example, ceramics comprising sintered alumina (Al₂O₃), P.P.S. (polyphenylene sulfide) resin, or stainless steel into a desired configuration such as a disk-like or a square plate-like configuration. Preferably, the contact surface of each element is finished as a minutely polished planar surface to ensure a close contact between the fixed element and the movable element.

Each of the fixed element and the movable element has predetermined kinds of liquid communication passageways. These liquid communication passageways may include, an introducing passageway for introducing a liquid sample from outside, a measuring passageway for sampling the introduced liquid sample, a transferring passageway for transferring the measured liquid sample to outside, and a cleaning passageway for providing a cleaning-liquid communication flow. The movable element may be rotated or shifted by a driving means such as an air cylinder.

The housing may be formed of, for example, P.P.S. resin into a desired configuration such as a circular or a polygonal cylindrical configuration.

The pressing member may be pressingly disposed on the contact surface of the fixed element or the movable element in the housing so that the fixed element and the movable element are in close surface contact at their respective contact surfaces.

The fixed element and the movable element are housed in the housing and coaxially or non-coaxially held in place to be in close surface contact at their respective contact surfaces by the operation of the pressing member.

The liquid sampling valve of the present invention can assume at least two states in accordance with movement such as rotation or shift of the movable element. In other words, it can assume a first state in which the measuring passageway of the fixed element or the movable element is filled with a liquid sample introduced from outside and a second state in which the liquid sample having filled the measuring passageway is transferred to outside.

Further, the liquid sampling valve of the present invention may be provided with an introducing passageway disposed at a central portion of one of the fixed element and the movable element for introducing a liquid sample from outside and a discharging passageway disposed at a central portion of the other of the fixed element and the movable element for discharging the liquid sample to outside.

A preferred embodiment of a liquid sampling valve of the present invention is such that each of the fixed element and the movable element is a disk having a circular contact surface and a peripheral wall surface connected thereto and the housing is a circular cylinder having a peripheral wall whose inside surface is in contact with the peripheral wall surface of each of the fixed element and the movable element, the fixed element being coaxially housed in the housing and fixedly held in place so that the fixed element is unrotatable, and the movable element being coaxially housed in the housing and movably held in place so that the movable element is rotatable within a predetermined angle range.

Another preferred embodiment of a liquid sampling valve of the present invention is such that the fixed element comprises two disks each having a circular contact surface and a peripheral wall surface connected thereto, the movable element is a disk having two circular contact surfaces and a peripheral wall surface connected thereto, the movable element being interposed between the two disks constituting the fixed element; and the housing is a circular cylinder having a peripheral wall whose inside surface is in contact with the peripheral wall surface of each of the fixed element and the movable element, the fixed element being coaxially housed in the housing and fixedly held in place so that the fixed element is unrotatable, and the movable element being coaxially housed in the housing and movably held in place so that the movable element is rotatable within a predetermined angle range.

The movable element of the liquid sampling valve according to the above two embodiments is connected to a driving means such as an air cylinder either directly or via a rotating member such as a rotating ring. The driving means allows the movable member to rotate around a central axis of the housing within a predetermined angle range. The liquid sampling valve can thus assume the aforementioned two states in accordance with the rotation of the movable element.

The fixed element in the liquid sampling valve according to these two embodiments is preferably arranged in a fixed manner by engaging with an engaging section provided on the inner surface of the peripheral wall of the housing. In other words, the fixed element preferably has a concave or convex engaging section provided on its peripheral wall surface, and the fixed element is preferably disposed in the housing in a fixed manner by engagement of its concave or convex engaging section with the convex or concave engaging section provided on the inner surface of the peripheral wall of the housing so that the fixed element cannot be rotated or shifted.

If the liquid sampling valve of the present invention is fabricated in accordance with the latter of the above two embodiments, the pressing member may comprise, for example, a cap fixed to the housing and an elastic member disposed between the cap and one of the fixed elements located nearer to the cap for pressing the fixed element onto the movable element. In other words, the cap is, for example, detachably screwed onto the outside surface of the peripheral wall of the cylindrical housing. The elastic member may be formed of, for example, a compression-type coil spring, a leaf spring, or a soft rubber body. The elastic member may be disposed between the cap and one of the fixed elements located nearer to the cap for pressing the fixed element onto the movable element.

Also, if the liquid sampling valve of the present invention is fabricated according to the latter of the above two embodiments, the housing may preferably comprise a holding section (a steplike portion) provided on the inner surface of the peripheral wall of the housing and having a stepwise increasing diameter in accordance with the order of housing the elements. In other words, if the two fixed elements and the one movable element are housed in the housing in such a manner that one of the fixed elements having a small diameter, the movable element having a middle diameter, and the other of the fixed elements having a larger diameter are housed in the housing in this order, the housing preferably comprises a holding section having three different diameters on the inner surface of the peripheral wall of the housing, the three diameters being small, middle, and large in accordance with the order of housing the three elements. Use of a housing having such a holding section makes it possible to fabricate the housing easily by plastic molding, to reduce the fabrication costs, and to eliminate the fear of erring the order of housing the elements in assembling the housing and the three elements into a liquid sampling valve.

Further, if the liquid sampling valve of the present invention is fabricated in accordance with the latter of the above two embodiments, the peripheral wall surface of the movable element is preferably chamfered (bevelled) at its portions adjacent the contact surfaces so that the portions may not come into contact with the contact surfaces of the fixed elements or the inner surface of the peripheral wall of the housing. In the movable element thus fabricated, the area which is in contact with the inner surface of the peripheral wall of the housing is reduced when compared with a non-chamfered one, so that the movable element rotates more easily while being interposed between the two fixed elements.

Also, if the liquid sampling valve of the present invention is fabricated in accordance with the latter of the above two embodiments, it is preferable that one of the fixed elements comprises an introducing passageway; the other of the fixed elements comprises a discharging passageway; the movable element comprises a measuring passageway located at a position away from the central portion of the. movable element for extracting a predetermined quantity of the introduced liquid sample; and the elements further comprise an introduction-side connecting passageway for connecting the introducing passageway with the measuring passageway and a discharge-side connecting passageway for connecting the measuring passageway with the discharging passageway. In the liquid sampling valve thus fabricated, the liquid sample is introduced into one of the fixed elements via the introducing passageway of the fixed element and passes through the introduction-side connecting passageway to fill the measuring passageway of the movable element at a predetermined quantity (the first state). Then, the movable element is rotated by a predetermined angle to allow liquid communication between the measuring passageway and the sample transferring passageways of the fixed elements so that the liquid sample filling the measuring passageway may be transferred to outside of the movable element (the second state).

The introduction-side connecting passageway and the discharge-side connecting passageway may be provided on, for example, the contact surface of each of the fixed elements in a concave shape, namely, in a groove-like or furrow-like shape.

Also, a plurality of cleaning passageways may be provided in the fixed element and the movable element so as to surround the measuring passageways in the liquid sampling valve of the present invention.

If the liquid sampling valve of the present invention is fabricated in accordance with the latter of the above two embodiments, each of the three elements may preferably comprise a cleaning passageway disposed at a position nearer to the periphery than the measuring passageway of the movable element for cleaning the various passageways and/or the contact surface of each of the elements.

Further, the liquid sampling valve of the present invention may be constructed in such a manner that, in the contact surface of one of the fixed and movable elements having a surface contact with each other, there are provided a land section and a pool section, the land section serving to have a surface contact with the contact surface of the other element and the pool section serving to pool the cleaning liquid while surrounding the land section. The number, shape, size, and the like of the land sections and the pool sections are suitably determined in accordance with the kind of sample, size of the liquid sampling valve, and the like.

If the liquid sampling valve of the present invention is fabricated in accordance with the latter of the above two embodiments, it is preferable that a cleaning liquid introducing passageway is provided at a central portion of one of the two fixed elements for introducing a cleaning liquid from outside; a land section and a pool section are provided in each of the two contact surfaces of the movable element; and a cleaning liquid discharging passageway is provided at a central portion of the other of the two fixed elements for discharging the cleaning liquid to outside; one of the pool sections being in liquid communication with the cleaning liquid introducing passageway and the other of the pool sections being in liquid communication with the cleaning liquid discharging passageway.

In the liquid sampling valve thus fabricated, the cleaning liquid is introduced into one of the fixed elements via the cleaning liquid introducing passageway of the fixed element and fills one or both of the pool sections of the movable element. Then, the cleaning liquid cleans the contact surface between one of the fixed elements and the movable element and the various passageways or each of the contact surfaces between both of the fixed elements and the movable element and the various passageways and is discharged to outside via the cleaning liquid discharging passageway of the other of the fixed elements.

If the liquid sampling valve of the present invention is thus fabricated, it is preferable that the movable element comprises a measuring passageway for extracting a predetermined quantity of the introduced sample, one end of the measuring passageway being open to one of the land sections and the other end of the measuring passageway being open to the other of the land sections. By this construction, it is possible to clean both ends of the measuring passageway effectively with the cleaning liquid pooled in both of the pool sections of the movable element.

### EMBODIMENTS

The preferred embodiments of the present invention will now be detailed in conjunction with the accompanying drawings. However, these embodiments are not intended to restrict the scope of the present invention, and should be regarded only as an illustrative example.

### Embodiment 1

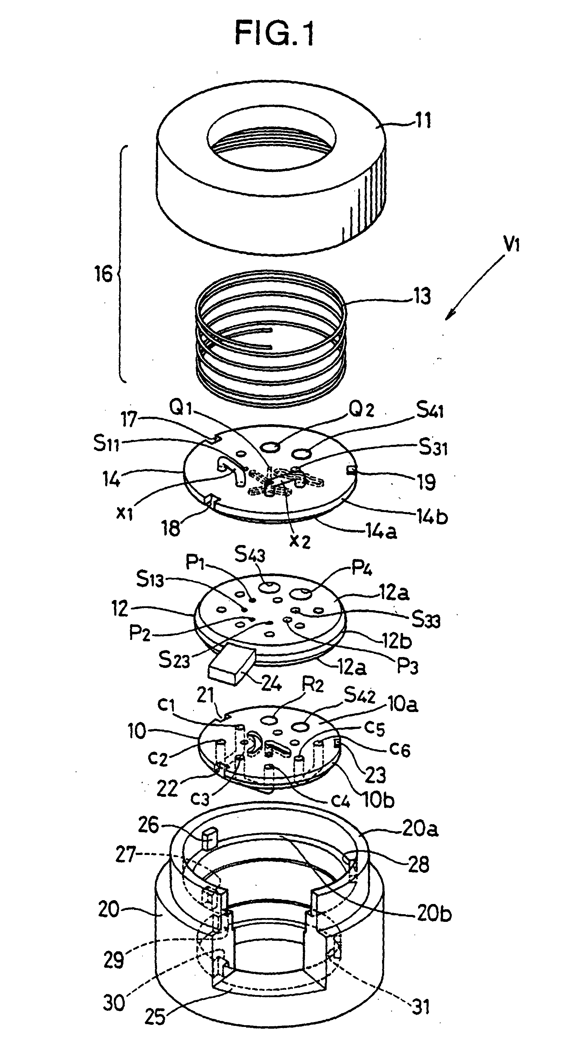

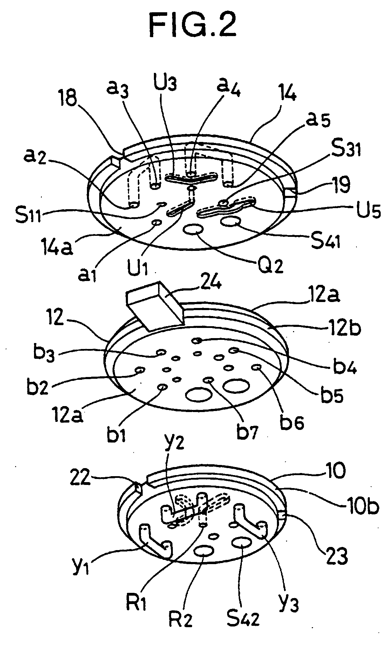

Figs. 1 and 2 are exploded perspective views showing a liquid sampling valve V₁ according to embodiment 1 of the present invention. The liquid sampling valve V₁ comprises two upper and lower fixed elements 10, 14, one movable element 12, a housing 20, and a pressing member 16.

Each of the fixed elements 10, 14 is disk-like and has one circular contact surface 10a, 14a and a peripheral wall surface 10b, 14b connected thereto. The lower fixed element 10 has a small diameter and the upper fixed element 14 has a large diameter. The movable element 12 is also disk-like and has a diameter which is larger than that of the lower fixed element 10 and is smaller than that of the upper fixed element 14. The movable element 12 has two circular contact surfaces 12a, 12a and a peripheral wall surface 12b connected thereto. These three elements 10, 14, 12 are formed of ceramics comprising sintered alumina (Al₂O₃) and their surfaces -- especially the contact surfaces 10a, 14a, 12a, 12a -- are finished as a minutely polished planar surface to ensure a close contact between the fixed elements 10, 14 and the movable element 12.

The housing 20 is formed of P.P.S. (polyphenylene sulfide) resin and is a generally circular cylinder which is open at its upper and lower ends. The housing 20 houses and holds the three elements 10, 14, 12 coaxially with the movable element 12 being interposed between the two fixed elements 10, 14. A step-like holding section 20b is provided on the inner surface of the peripheral wall 20a of the housing 20 for holding the three elements 10, 14, 12. The holding section 20b comprises a vertical portion and a horizontal portion. When the three elements 10, 14, 12 are housed and held in place in the housing 20, the peripheral wall surfaces 10b, 14b, 12b thereof come into contact with the vertical portion of the holding section 20b. When the three elements 10, 14, 12 are housed and held in place in the housing 20, the movable element 12 can be rotated while the two contact surfaces 12a, 12a are in surface contact with the contact surfaces 10a, 14a of the fixed elements 10, 14, respectively.

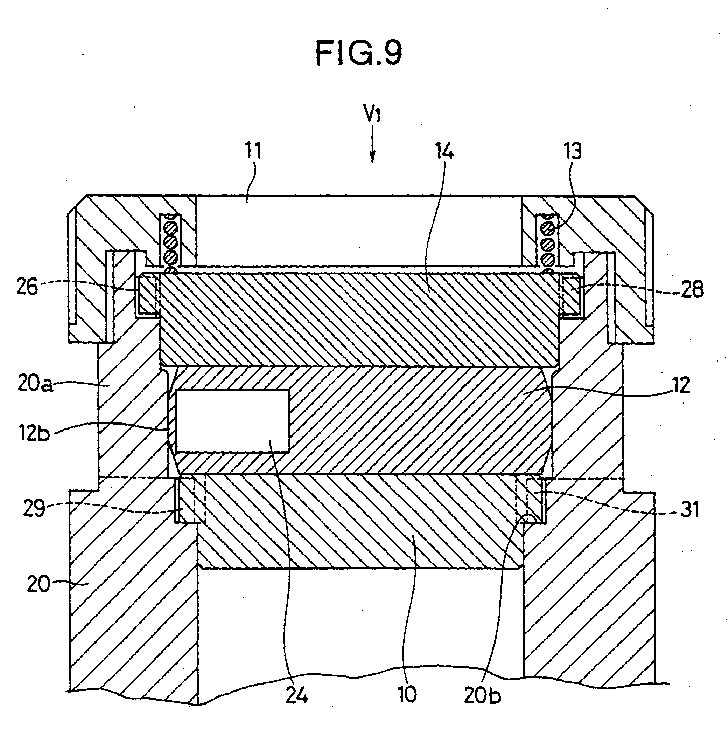

The pressing member 16 comprises a cap 11 and an elastic member 13 which is a compression-type coil spring. The cap 11 is made of ABS resin and has a cylindrical shape whose upper central portion is open in a circular shape. A female screw portion is provided on the interior surface of the peripheral wall of the cap 11 for screw engagement with a male screw portion disposed on the upper exterior surface of the peripheral wall 20a of the housing 20. The coil spring 13 is made of stainless steel and is disposed between the cap 11 and the fixed element 14 having a large diameter which is a fixed element nearer to the cap 11 so as to press the fixed element 14 onto the movable element 12 (See Fig. 9).

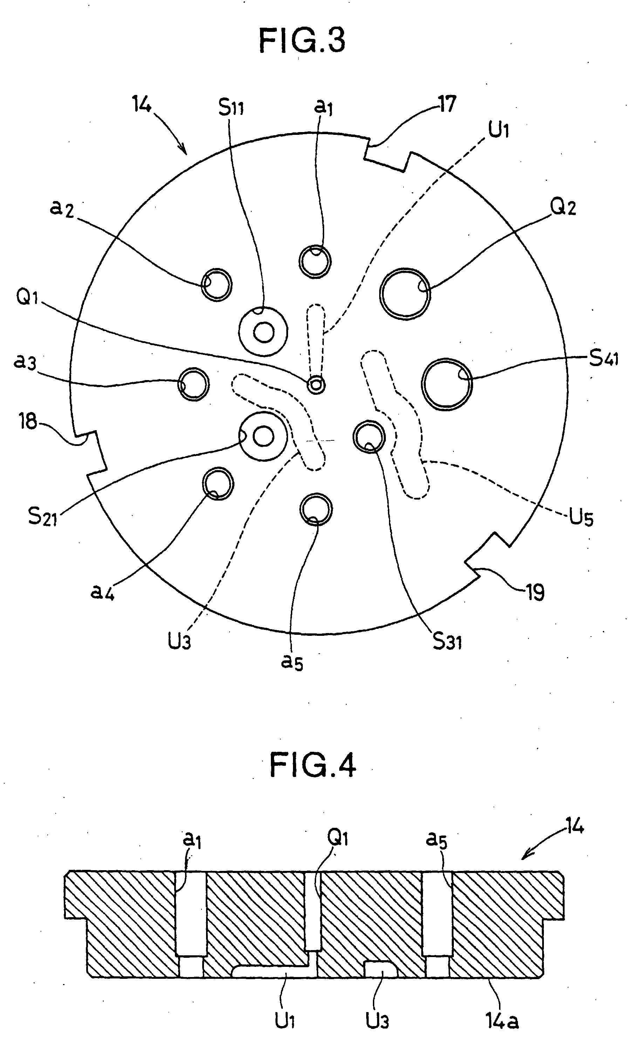

An introducing passageway Q₁ is provided through the center of the fixed element 14 for introducing a first sample (whole blood), as shown enlarged in Figs. 3 and 4. The passageway Q₁ has a circular shape in its plan view. One end of the passageway Q₁ is open to the upper surface of the fixed element 14, and the other end of the passageway is open to the lower surface (contact surface 14a) of the fixed element 14 to be in liquid communication with the connecting passageway U₁ formed as a U-shaped groove. Also, three sample dilution/transfer passageways S₁₁, S₂₁, S₃₁ are provided through the fixed element 14. Each of the passageways S₁₁, S₂₁, S₃₁ has a circular shape in its plan view and is step-like so that the upper portion has a large diameter and the lower portion has a small diameter. The three sample dilution/transfer passageways S₁₁, S₂₁, S₃₁ are provided in such a manner that their central axes are located equally distant from the central axis of the passageway Q₁, with the passageways S₁₁ and S₂₁ forming a central angle of 90° relative to the central axis of the passageway Q₁ and with the passageways S₂₁ and S₃₁ forming a central angle of 90° relative to the central axis of the passageway Q₁.

Further, an introducing passageway Q₂ is provided through the fixed element 14 at a position more distant from the central axis of the passageway Q₁ than the passageways S₁₁, S₂₁, S₃₁, the introducing passageways serving to introduce a second sample (obtained by dilution of the first sample) into liquid communication. The passageway Q₂ has a circular shape in its plan view. One end of the passageway Q₂ is open to the upper surface of the fixed element 14 and the other end of the passageway Q₂ is open to the lower surface of the fixed element 14. A portion having a smaller diameter is provided halfway in the passageway Q₂. A sample dilution/transfer passageway S₄₁ having the same size as the passageway Q₂ is provided through the fixed element 14 at a position near the passageway Q₂. The passageway S₄₁ and the passageway Q₂ are disposed on the same circumference to form a central angle of 45° relative to the central axis of the passageway Q₁.

Further, cleaning passageways a₁, a₂, a₃, a₄, and a₅ are provided through the fixed element 14 for communicating the cleaning liquid or the exhausted solution. Each of the cleaning passageways a₁, a₂, a₃, a₄, and a₅ has a circular shape in its plan view and has the same size. The passage-ways a₁, a₃, and a₅ are disposed on the same circumference which is concentric with the passageway Q₁ so that the passageways a₁ and a₃ form a central angle of 90° and the passageways a₃ and a₅ form a central angle of 90°. The passageways a₂ and a₄ are disposed on the same circumference which is concentric with the passageway Q₁ so that the passageways a₂ and a₁ form a central angle of 45° and the passageways a₄ and a₃ form a central angle of 45°. Here, the passageway a₁ and the passageway Q₂ form a central angle of 45° relative to the central axis of the passageway Q₁.

Two connecting passageways U₃ and U₅ are formed as U-shaped grooves in the contact surface 14a of the fixed element 14 in the same manner as the connecting passageway U₁.

The passageway a₂ and the passageway a₃ in the fixed element 14 are connected by a connecting pipe x₁ formed of stainless steel and disposed on the upper surface of the fixed element 14, as shown in Figs. 1 and 2. Also, the passageway a₄ and the passageway a₅ in the fixed element 14 are connected by a similar connecting pipe x₂.

Three cut portions 17, 18, 19 are provided as concave engaging sections at a predetermined spacing in the peripheral wall surface 14b of the fixed element 14.

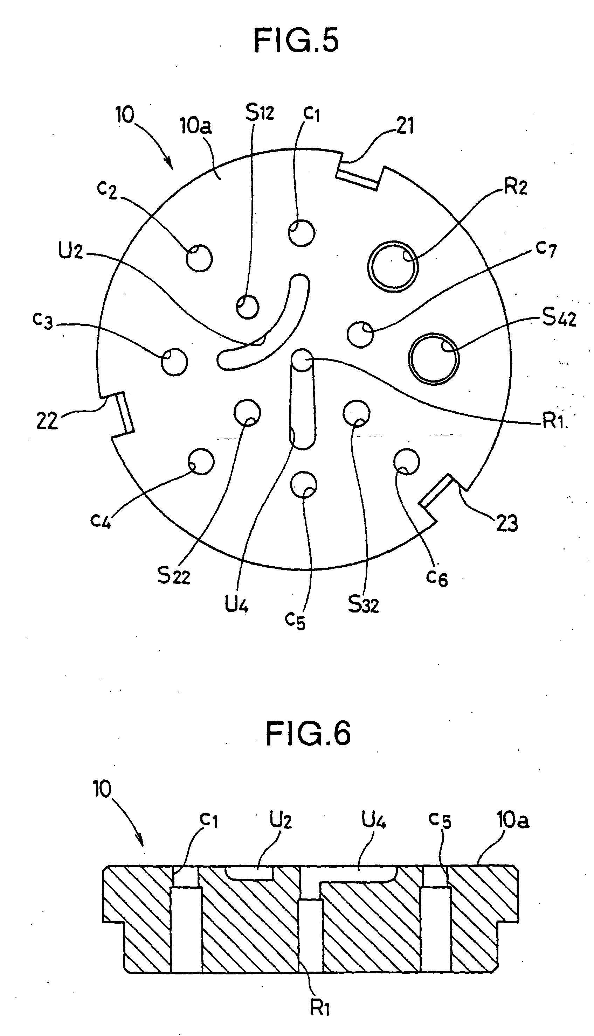

A passageway R₁ is provided through the center of the lower fixed element 10 (having a small diameter) for communicating the first sample, as shown enlarged in Figs. 5 and 6. The passageway R₁ has a circular shape in its plan view. One end of the passageway R₁ is open to the lower surface of the fixed element 10, and the other end of the passageway is open to the upper surface (contact surface 10a) of the fixed element 10 to be in liquid communication with the connecting passageway U₄ formed as a U-shaped groove. Also, three sample dilution/transfer passageways S₁₂, S₂₂, S₃₂ are provided through the fixed element 10. Each of the passageways S₁₂, S₂₂, S₃₂ has a circular shape in its plan view and is step-like so that the upper portion has a small diameter and the lower portion has a large diameter. The three sample dilution/transfer passageways S₁₂, S₂₂, S₃₂ are provided in such a manner that their central axes are located equally distant from the central axis of the passageway R₁, with the passageways S₁₂ and S₂₂ forming a central angle of 90° relative to the central axis of the passageway R₁ and with the passageways S₂₂ and S₃₂ forming a central angle of 90° relative to the central axis of the passageway R₁.

Further, a passageway R₂ for communicating the second sample is provided through the fixed element 10 at a position more distant from the central axis of the passageway R₁ than the passageways S₁₂, S₂₂, S₃₂. The passageway R₂ has a circular shape in its plan view. One end of the passageway R₂ is open to the upper surface of the fixed element 10 and the other end of the passageway R₂ is open to the lower surface of the fixed element 10. A portion having a smaller diameter is provided halfway in the passageway R₂. A sample dilution/transfer passageway S₄₂ having the same size as the passageway R₂ is provided through the fixed element 10 at a position near the passageway R₂. The passageway S₄₂ and the passageway R₂ are disposed on the same circumference to form a central angle of 45° relative to the central axis of the passageway R₁.

Further, cleaning passageways c₁, c₂, c₃, c₄, c₅, c₆, and c₇ are provided through the fixed element 10 for communicating the cleaning liquid or the exhausted solution. The cleaning passageways c₁, c₂, c₃, c₄, c₅, c₆, and c₇ each have a circular shape in its plan view and have the same size. The passageways c₁, c₃, and c₅ are disposed on the same circumference which is concentric with the passageway R₁ so that the passageways c₁ and c₃ form a central angle of 90° and the passageways c₃ and c₅ form a central angle of 90°. The passageways c₂, c₄, and c₆ are disposed on the same circumference which is concentric with the passageway R₁ so that the passageways c₂ and c₁ form a central angle of 45° and the passageways c₄ and c₃ form a central angle of 45° and the passageways c₆ and c₅ form a central angle of 45°. The passageway c₇ is disposed at a position nearer to the center than the passageways S₁₂, S₂₂, and S₃₂ so that the passageway S₃₂ and the passageway c₇ form a central angle of 67.5°. Here, the passageway c₁ and the passageway R₂ form a central angle of 45° relative to the central axis of the passageway R₁.

A connecting passageway U₂ is formed as a U-shaped groove in the contact surface 10a of the fixed element 10 in the same manner as the connecting passageway U₄.

The passageway c₁ and the passageway c₂ in the fixed element 10 are connected by a connecting pipe y₁ formed of stainless steel and disposed on the lower surface of the fixed element 10, as shown in Figs. 1 and 2. Also, the passageway c₃ and the passageway c₄ in the fixed element 10 are connected by a similar connecting pipe y₂; and the passageway c₅ and the passageway c₆ in the fixed element 10 are connected by a similar connecting pipe y₃.

Three cut portions 21, 22, 23 are provided as concave engaging sections at a predetermined spacing in the peripheral wall surface 10b of the fixed element 10. The positions of these cut portions 21, 22, 23 correspond to the positions of the three cut portions 17, 18, 19 in the fixed element 14, respectively.

The position correspondence between the various passageways in the two fixed elements 14, 10 is as follows.

| In the fixed element 14 | In the fixed element 10 |
|---|---|
| the passageway Q₁ | the passageway R₁ |
| the passageway Q₂ | the passageway R₂ |
| the passageway S₁₁ | the passageway S₁₂ |
| the passageway S₂₁ | the passageway S₂₂ |
| the passageway S₃₁ | the passageway S₃₂ |
| the passageway S₄₁ | the passageway S₄₂ |
| the passageway a₁ | the passageway c₁ |
| the passageway a₂ | the passageway c₂ |
| the passageway a₃ | the passageway c₃ |
| the passageway a₄ | the passageway c₄ |
| the passageway a₅ | the passageway c₅ |
| no passageway | the passageway c₆ |
| no passageway | the passageway c₇ |

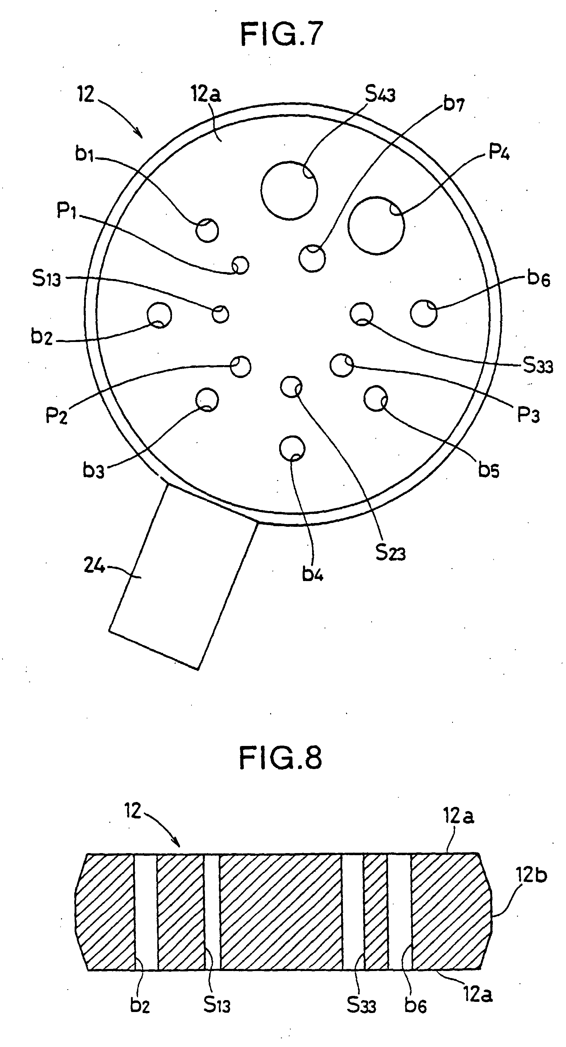

A protruding member 24 having a rectangular parallelepiped shape is provided on the peripheral wall surface 12b of the movable element 12, as shown enlarged in Figs. 7 and 8. The protruding member 24 is connected to an air cylinder (not shown) serving as a driving means and is used for rotative driving of the movable element 12.

Four measuring passageways P₁, P₂, P₃, and P₄ are provided through the movable element 12 for communicating and extracting a predetermined quantity of the sample. The passageway P₁ is for measuring hemoglobin (HGB); the passageway P₂ is for measuring red blood cells (RBC); and the passageway P₃ is for measuring white blood cells (WBC). Each of the passageways P₁, P₂, P₃, and P₄ has a circular shape in its plan view. One end of each of the passageways P₁, P₂, P₃, and P₄ is open to the upper contact surface 12a of the movable element 12 and the other end is open to the lower contact surface 12a of the movable element 12. The passageways P₁, P₂, and P₃ are disposed on the same circumference which is concentric with the movable element 12 so that the passageways P₁ and P₂ form a central angle of 90° and the passageways P₂ and P₃ form a central angle of 90°. The passageway P₄ is disposed at a position nearer to the periphery than the passageways P₁, P₂, and P₃ so that the passageway P₃ and the passageway P₄ form a central angle of 90°.

Four sample dilution/transfer passageways S₁₃, S₂₃, S₃₃, and S₄₃ are provided through the movable element 12. Each of the passageways S₁₃, S₂₃, S₃₃, and S₄₃ has a circular shape in its plan view. One end of each of the passageways S₁₃, S₂₃, S₃₃, and S₄₃ is open to the upper contact surface 12a of the movable element 12 and the other end is open to the lower contact surface 12a of the movable element 12. The passageways S₁₃, S₂₃, and S₃₃ are disposed on the same circumference as the passageways P₁, P₂, and P₃ so that the passageways S₁₃ and P₁ form a central angle of 45° and the passageways S₂₃ and P₂ form a central angle of 45° and the passageways S₃₃ and P₃ form a central angle of 45°. The passageway S₄₃ is disposed on the same circumference as the passageway P₄ so that the passageway S₃₃ and the passageway S₄₃ form a central angle of 90°.

Further, cleaning passageways b₁, b₂, b₃, b₄, b₅, b₆, and b₇ are provided through the movable element 12 for communicating the cleaning liquid or the exhausted solution. The cleaning passageways b₁, b₂, b₃, b₄, b₅, b₆, and b₇ each have a circular shape in its plan view. The passageways b₁, b₃, and b₅ are disposed on the same circumference which is concentric with the movable element 12 so that the passageways b₁ and b₃ form a central angle of 90° and the passageways b₃ and b₅ form a central angle of 90°. The passageways b₂, b₄, and b₆ are disposed on the same circumference which is concentric with the movable element 12 so that the passageways b₂ and b₄ form a central angle of 90° and the passageways b₄ and b₆ form a central angle of 90°. The passageway b₇ is disposed at a position nearer to the center than the passageways S₁₃, S₂₃, and S₃₃ so that the passageway S₃₃ and the passageway b₇ form a central angle of 67.5°. Here, the passageway b₁ and the passageway S₄₃ form a central angle of 45° relative to the central axis of the movable element 12.

The position correspondence between the various passageways in the fixed element 14 and the movable element 12 is as follows.

| In the fixed element 14 | In the movable element 12 |
|---|---|
| the passageway Q₁ | no passageway |
| the passageway Q₂ | the passageway S₄₃ |
| the passageway S₁₁ | the passageway S₁₃ |
| the passageway S₂₁ | the passageway S₂₃ |
| the passageway S₃₁ | the passageway S₃₃ |
| the passageway S₄₁ | the passageway P₄ |
| the passageway a₁ | the passageway b₁ |
| the passageway a₂ | the passageway b₂ |
| the passageway a₃ | the passageway b₃ |
| the passageway a₄ | the passageway b₄ |
| the passageway a₅ | the passageway b₅ |
| no passageway | the passageway b₆ |
| no passageway | the passageway b₇ |

Referring to Fig. 8, the peripheral wall surface 12b of the movable element 12 is chamfered (bevelled) at its portions adjacent the contact surfaces 12a, 12a so that the portions may not come into contact with the contact surfaces 14a, 10a of the fixed elements 14, 10 or the inner surface of the peripheral wall 20a of the housing 20. In the movable element 12 thus fabricated, the area which is in contact with the inner surface of the peripheral wall 20a of the housing 20 is reduced when compared with a non-chamfered one, so that the movable element 12 rotates more easily while being interposed between the two fixed elements 14, 10.

Referring to Fig. 1, a cut portion 25 is provided at a portion (front) of the peripheral wall 20a of the housing 20. The cut portion 25 is constructed in such a manner that 75% of the total height of the peripheral wall 20a is cut and removed within the central angle range of 75° and from the upper fringe downwards. The cut portion 25 enables the protruding member 24 of the movable element 12 to be disposed in the cut portion 25 and restricts the range of its rotation.

In other words, the protruding length and the protruding width of the protruding member 24 of the movable element 12 are determined so that the protruding member 24 may be disposed forward in the cut portion 25 of the peripheral wall 20a to be rotatable within the central angle range of 45°.

Six projections 26, 27, 28, 29, 30, 31 are provided as convex engaging sections in two upper and lower tiers on the inner surface of the peripheral wall 20a of the housing 20. The three projections 26, 27, 28 in the upper tier correspond to the three cut portions 17, 18, 19 of the upper fixed element 14 and mesh with the cut portions 17, 18, 19 into engagement, respectively, when the fixed element 14 is disposed at a predetermined position in the housing 20. The three projections 29, 30, 31 in the lower tier correspond to the three cut portions 21, 22, 23 of the lower fixed element 10 and mesh with the cut portions 21, 22, 23 into engagement, respectively, when the fixed element 10 is disposed at a predetermined position in the housing 20 (See Fig. 9).

The lower fixed element 10 (having a small diameter), the movable element 12 (having a middle diameter), and the upper fixed element 14 (having a large diameter) are housed in the housing 20 in this order. The holding section 20b in the inner surface of the peripheral wall 20a of the housing 20 is formed in a step-like shape to have a small-diameter portion, a middle diameter portion, and a large-diameter portion in this order from the lower side upwards, corresponding to the three elements 10, 12, and 14 (See Fig. 9).

The liquid sampling valve V₁ can assume two states in accordance with the rotation of the movable element 12. Namely, it can assume a first state in which the measuring passageways P₁ to P₄ of the movable element 12 are filled with a liquid sample introduced from outside and a second state in which the liquid sample having filled the measuring passageways P₁ to P₄ is transferred to outside.

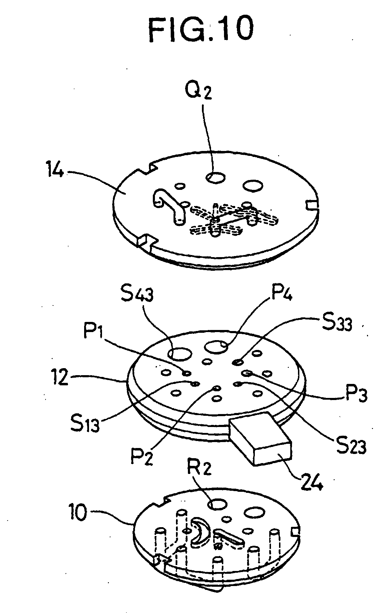

In other words, the first state is a state in which the movable element 12 is at the position shown in Fig. 1 (Fig. 2), and the second state is a state in which the movable element 12 comes to the position shown in Fig. 10 by being rotated anti-clockwise by a central angle of 45° from the first state.

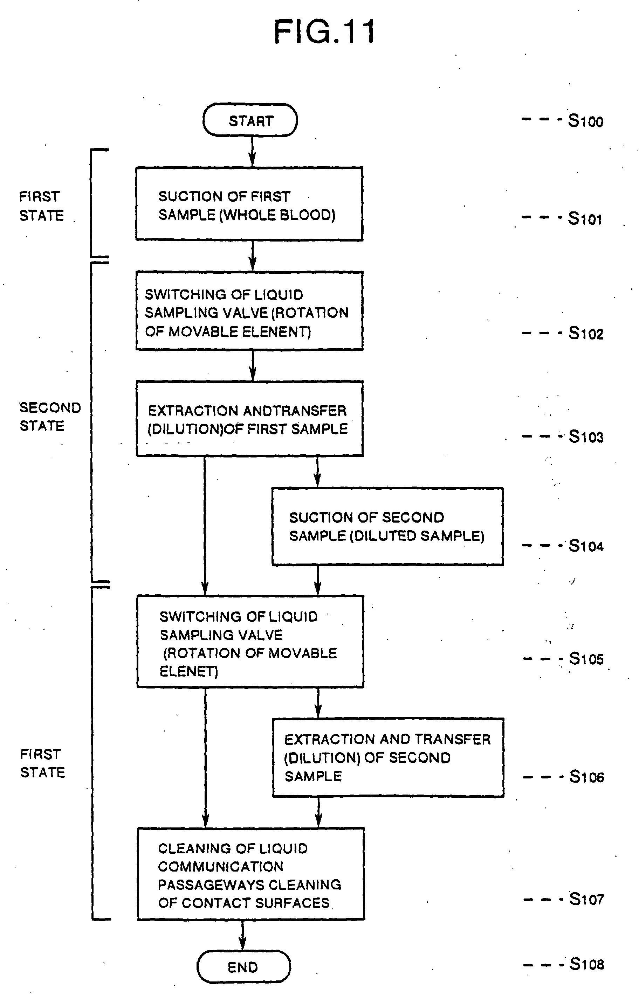

By referring to the flow chart shown in Fig. 11, the operations of sucking and transferring a liquid sample and cleaning in the liquid sampling valve V₁ thus fabricated will be explained.

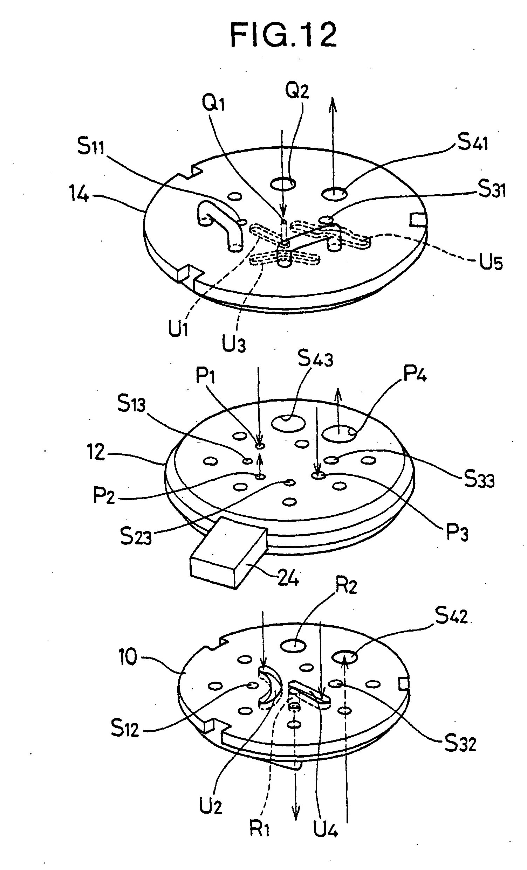

Fig. 12 is an enlarged view of a portion in Fig. 1 and shows a case in which the movable element 12 is in the first state. Referring to Figs. 11 and 12, the sucking (S₁₀₁) of the first sample (whole blood) is conducted from the START (S₁₀₀) as follows. First, the first sample is injected into the passageway Q₁ of the fixed element 14 with a pipette (not shown). The sample flows through the passageway Q₁ of the fixed element 14, the connecting passageway U₁, and the HGB measuring passageway P₁ of the movable element 12 to the connecting passageway U₂ of the fixed element 10. Then, the sample turns back at the passageway U₂ and flows through the RBC measuring passageway P₂ of the movable element 12 to the connecting passageway U₃ of the fixed element 14. The sample turns back again at the passageway U₃ and flows through the WBC measuring passageway P₃ of the movable element 12, the connecting passageway U₄ of the fixed element 10, and the passageway R₁ of the fixed element 10 to be introduced into a pump (not shown) located outside the liquid sampling valve V₁.

The operation of sucking the first sample is finished by such a flow of: pipette -> Q₁ -> U₁ -> P₁ -> U₂ -> P₂ -> U₃ -> P₃ -> U₄ -> R₁ -> pump (direction of flow shown by arrow in Fig. 12). Consequently, the passageway P₁ is filled with a sample for HGB; the passageway P₂ is filled with a sample for RBC; and the passageway P₃ is filled with a sample for WBC each at a prescribed amount.

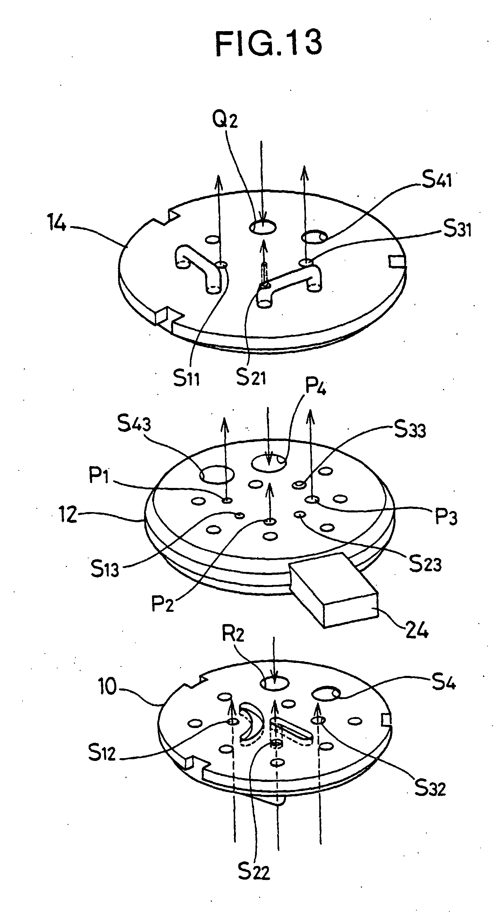

When the operation of switching the liquid sampling valve V₁ from the first state is conducted (S₁₀₂), the movable element 12 is rotated anti-clockwise by a central angle of 45° to be introduced into the second state (Fig. 10) in which a diluent solution flows as shown in Fig. 13.

In other words, Fig. 13 is an enlarged view of Fig. 10 and shows a case in which the movable element 12 is in the second state for extracting and transferring (diluting) predetermined amounts of the first sample (S₁₀₃). As shown by an arrow in Fig. 13, the diluent solution for HGB flows in the direction of: pump -> S₁₂ -> P₁ -> S₁₁ -> flow cell (not shown). Here, a hemolyzing agent for HGB is added into the flow cell at the same time and a predetermined measurement is conducted after stirring. The diluent solution for WBC flows in the direction of: pump -> S₃₂ -> P₃ -> S₃₁ -> chamber for WBC (not shown). Here, a hemolyzing agent for WBC is added into the chamber for WBC at the same time and a predetermined measurement is conducted after stirring. The diluent solution for RBC flows in the direction of: pump -> S₂₂ -> P₂ -> S₂₁ -> mixing chamber (not shown), and is stirred in the mixing chamber for preparation of the second sample. This completes the operations of extracting and transferring (diluting) predetermined amounts of the first sample.

Subsequently, the second sample (diluted sample) prepared in the mixing chamber is subjected to a sucking operation (S₁₀₄). Namely, the second sample flows in the direction of: mixing chamber -> Q₂ -> P₄ -> R₂ -> pump, and fills the passageway P₄ at a predetermined amount.

Thereafter, when the operation of switching the liquid sampling valve V₁ is conducted again (S₁₀₅), the movable element 12 is rotated clockwise by a central angle of 45° to be introduced into the first state in which a diluent solution flows in the direction of: pump -> S₄₂ -> P₄ -> S₄₁ -> chamber for RBC (not shown), as shown by an arrow in Fig. 12. This completes the operation of extracting and transferring (diluting) the second sample (S₁₀₆).

The liquid sampling valve V₁ thus brought into the first state by the switching operation (S₁₀₅) is then subjected to cleaning operations (S₁₀₇), which include an operation of cleaning the various passageways in the three elements 10, 14, 12 and an operation of cleaning the contact surfaces 10a, 14a, 12a, 12a.

The operation of cleaning the various passageways is conducted by letting a cleaning liquid to flow through the following lines.
First sample sucking line: pump -> R₁ -> U₄ -> P₃ -> U₃ -> P₂ -> U₂ -> P₁ -> U₁ -> Q₁ -> pipette
HGB line: pump -> S₁₂ -> S₁₃ -> S₁₁ -> flow cell
WBC line: pump -> S₃₂ -> S₃₃ -> S₃₁ -> chamber for WBC
RBC line: mixing chamber -> Q₂ -> S₄₃ -> R₂ -> pump

In the mixing chamber on the RBC line, the second sample is discharged and the cleaning liquid (for cleaning the mixing chamber) is introduced. Subsequently, the cleaning liquid stored in the mixing chamber is sucked by the pump for cleaning the passageways.

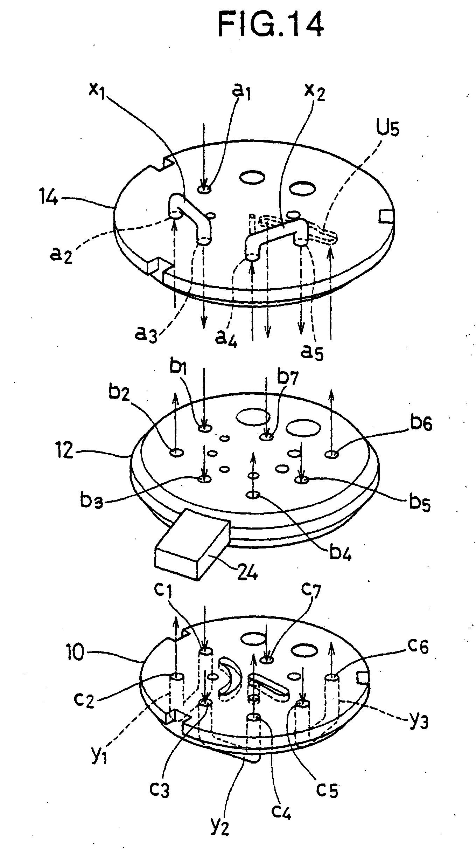

The operation of cleaning the contact surfaces 10a, 14a, 12a, 12a of the three elements 10, 14, 12 is conducted by letting a cleaning liquid to flow through the following line as shown by an arrow in Fig. 14.
pump -> a₁ -> b₁ -> c₁ -> y₁ -> c₂ -> b₂ -> a₂ -> x₁ -> a₃ -> b₃ -> c₃ -> y₂ -> c₄ -> b₄ -> a₄ -> x₂ -> a₅ -> b₅ -> c₅ -> y₃ -> c₆ -> b₆ -> U₅ -> b₇ -> c₇ -> exhausted liquid chamber (not shown)

Although the operation of cleaning the contact surfaces 10a, 14a, 12a, 12a is typically conducted at the step S₁₀₇, it may be conducted at any of the steps S₁₀₁ to S₁₀₇.

Since the liquid sampling valve V₁ of the present invention is constructed as shown above, it exhibits the following unexpected effect when compared with conventional liquid sampling valves.

Namely, the present invention makes it possible to omit a shaft required in conventional liquid sampling valves and to dispose various passageways at the central portion of each of the three elements 10, 14, 12 instead of a shaft bore disposed in conventional sampling valves. Therefore, the costs for manufacturing the liquid sampling valves can be decreased by reducing the size of the elements 10, 14, 12 and utilizing the contact surfaces 10a, 14a, 12a, 12a effectively (i.e. more freedom in designing the passageway arrangement and the like).

Since the shaft bore which was disposed at the central portion of the elements in conventional liquid sampling valves is omitted, it is possible to disregard the inconveniencies of the operation at the central portion of the elements 10, 14, 12, thereby ensuring a long-term stability of the operation of the liquid sampling valve V₁.

Also, since no shaft bore is disposed, the present invention makes it possible to alleviate the measures such as cleaning the central portion for preventing liquid leakage and sticking.

In addition, the cut portions 17, 18, 19, 21, 22, 23 which are the concave engaging sections provided on the peripheral wall surfaces of the two fixed elements 10, 14 are engaged with the projections 26, 27, 28, 29, 30, 31 which are the convex engaging sections provided on the inner surface of the peripheral wall 20a of the housing 20. Therefore, the two fixed elements 10, 14 are firmly fixed within the housing 20.

Moreover, since the pressing member 16 including the cap 11 and the coil spring 13 allows close surface contact of the three elements 10, 14, 12 in the housing 20, it is possible to effectively eliminate a fear of liquid leakage or sticking on the contact surfaces 10a, 14a, 12a, 12a.

Further, in the inner surface of the peripheral wall 20a of the housing 20, there is disposed a holding section 20b formed in a step-like shape to have a small-diameter portion, a middle diameter portion, and a large-diameter portion in this order from the lower side upwards, corresponding to the three elements 10, 12, 14. Therefore, it is possible to fabricate the housing 20 easily by plastic molding, to reduce the fabrication costs, and to eliminate the fear of erring the order of housing the elements 10, 12, 14 in assembling the housing 20 and the three elements 10, 12, 14 into the liquid sampling valve V₁.

Also, the peripheral wall surface 12b of the movable element 12 is chamfered (bevelled) at its portions adjacent the contact surfaces 12a, 12a so that the portions may not come into contact with the contact surfaces 14a, 10a of the fixed elements 14, 10 or the inner surface of the peripheral wall 20a of the housing 20. In the movable element 12 thus fabricated, the area which is in contact with the inner surface of the peripheral wall 20a of the housing 20 is reduced when compared with a non-chamfered one, so that the movable element 12 rotates more easily while being interposed between the two fixed elements 14, 10.

### Embodiment 2

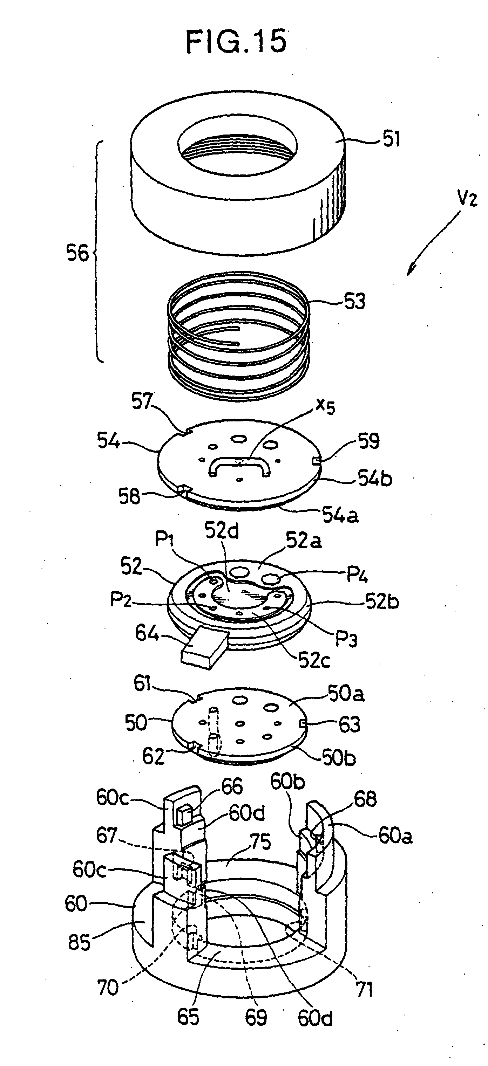

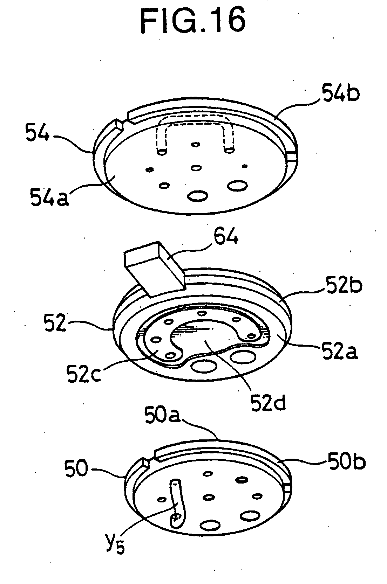

Figs. 15 and 16 are exploded perspective views showing a liquid sampling valve V₂ according to embodiment 2 of the present invention. The liquid sampling valve V₂ comprises two upper and lower fixed elements 50, 54, one movable element 52, a housing 60, and a pressing member 56.

Each of the fixed elements 50, 54 is disk-like and has one circular contact surface 50a, 54a and a peripheral wall surface 50b, 54b connected thereto. The lower fixed element 50 has a small diameter and the upper fixed element 54 has a large diameter. The movable element 52 is also disk-like and has a diameter which is larger than that of the lower fixed element 50 and is smaller than that of the upper fixed element 54. The movable element 52 has two annular contact surfaces 52a, 52a, a peripheral wall surface 52b connected thereto, and two U-shaped contact surfaces 52c, 52c disposed inside the annular contact surfaces 52a, 52a. The portions of the upper and lower surfaces of the movable element 52 other than the contact surfaces 52a, 52a, 52c, 52c are formed into non-contact surfaces 52d, 52d by allowing the portions to have a lower height than the contact surfaces 52a, 52a, 52c, 52c.

Three cut portions 57, 58, 59 are provided as concave engaging sections at a predetermined spacing in the peripheral wall surface 54b of the fixed element 54. Three cut portions 61, 62, 63 are provided as concave engaging sections at a predetermined spacing in the peripheral wall surface 50b of the fixed element 50. The positions of these cut portions 61, 62, 63 correspond to the positions of the three cut portions 57, 58, 59 in the fixed element 54, respectively.

These three elements 50, 54, 52 are formed of ceramics comprising sintered alumina (Al₂O₃) and their surfaces -- especially the contact surfaces 50a, 54a, 52a, 52a, 52c, 52c -- are finished as a minutely polished planar surface to ensure a close contact between the fixed elements 50, 54 and the movable element 52.

The housing 60 is formed of P.P.S. (polyphenylene sulfide) resin and has a generally annular shape obtained by cutting, at three locations, a circular cylinder which is open at its upper and lower ends, leaving the lower peripheral wall. The housing 60 comprises three large and small peripheral walls 60a, 60c, 60c, and houses and holds the three elements 50, 54, 52 coaxially with the movable element 52 being interposed between the two fixed elements 50, 54. Step-like holding sections 60b, 60d, 60d are provided on the inner surfaces of the peripheral walls 60a, 60c, 60c of the housing 60 for holding the three elements 50, 54, 52. The holding sections 60b, 60d, 60d each comprise a vertical portion and a horizontal portion.

When the three elements 50, 54, 52 are housed and held in place in the housing 60, the peripheral wall surfaces 50b, 54b, 52b thereof come into contact with the vertical portions of the holding sections 60b, 60d, 60d. When the three elements 50, 54, 52 are housed and held in place in the housing 60, the movable element 52 can be rotated while the four contact surfaces 52a, 52a, 52c, 52c are in surface contact with the contact surfaces 50a, 54a of the fixed elements 50, 54, respectively.

Various passageways and connecting pipes x₅, y₅ are provided in the three elements 50, 54, 52, in the same manner as in the liquid sampling valve V₁ of Embodiment 1. These passageways may be, in configuration, a little different from those of the liquid sampling valve V₁ with respect to the number, the state and the like of the passageways. However, their basic functions are the same as those of the liquid sampling valve V₁, so that the explanation thereof will be omitted here.

A protruding member 64 having a rectangular parallelepiped shape is provided on the peripheral wall surface 52b of the movable element 52. The protruding member 64 is connected to an air cylinder (not shown) serving as a driving means and is used for rotative driving of the movable element 52.

The peripheral wall surface 52b of the movable element 52 is chamfered (bevelled) at its portions adjacent the contact surfaces 52a, 52a so that the portions may not come into contact with the contact surfaces 54a, 50a of the fixed elements 54, 50 or the inner surfaces of the peripheral walls 60a, 60c, 60c of the housing 60. In the movable element 52 thus fabricated, the area which is in contact with the inner surfaces of the peripheral walls 60a, 60c, 60c of the housing 60 is reduced when compared with a non-chamfered one, so that the movable element 52 rotates more easily while being interposed between the two fixed elements 54, 50.

Referring to Fig. 15, cut portions 65, 75, 85 are provided between the adjacent peripheral walls 60a, 60c, 60c of the housing 60. The front cut portion 65 is constructed in such a manner that 75% of the total height of the portion between the two peripheral walls 60a, 60c is cut and removed within the central angle range of 75° and from the upper fringe downwards. The cut portion 65 enables the protruding member 64 of the movable element 52 to be disposed in the cut portion 65 and restricts the range of its rotation.

In other words, the protruding length and the protruding width of the protruding member 64 of the movable element 52 are determined so that the protruding member 64 may be disposed forward in the cut portion 65 of the housing 60 to be rotatable within the central angle range of 45°.

Six projections 66, 67, 68, 69, 70, 71 are provided as convex engaging sections in two upper and lower tiers on the inner surfaces of the peripheral walls 60a, 60c, 60c of the housing 60. The three projections 66, 67, 68 in the upper tier correspond to the three cut portions 57, 58, 59 of the upper fixed element 54 and mesh with the cut portions 57, 58, 59 into engagement, respectively, when the fixed element 54 is disposed at a predetermined position in the housing 60. The three projections 69, 70, 71 in the lower tier correspond to the three cut portions 61, 62, 63 of the lower fixed element 50 and mesh with the cut portions 61, 62, 63 into engagement, respectively, when the fixed element 50 is disposed at a predetermined position in the housing 60.

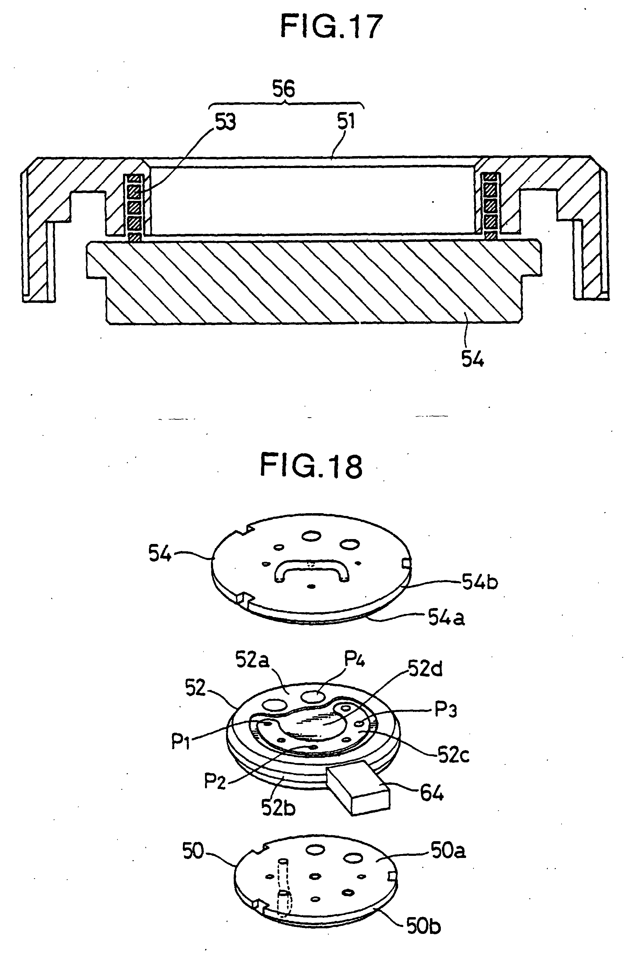

Referring to Figs. 15 and 17, the pressing member 56 comprises a cap 51 and an elastic member 53 which is a compression-type coil spring. The cap 51 is made of ABS resin and has a cylindrical shape whose upper central portion is open in a circular shape. A female screw portion is provided on the interior surface of the peripheral wall of the cap 51 for screw engagement with male screw portions disposed on the upper exterior surfaces of the peripheral walls 60a, 60c, 60c of the housing 60.

The coil spring 53 is made of stainless steel and has a square cross section. The coil spring 53 is disposed between the cap 51 and the fixed element 54 so as to press the fixed element 54 onto the movable element 52. Having a square cross section, the coil spring 53 can have a larger cross section than a coil spring having a circular cross section of the same size, thus increasing the spring constant. Therefore, the pressing member 56 is advantageous in reducing the required space.

The lower fixed element 50 (having a small diameter), the movable element 52 (having a middle diameter), and the upper fixed element 54 (having a large diameter) are housed in the housing 60 in this order. The holding sections 60b, 60d, 60d in the inner surfaces of the peripheral walls 60a, 60c, 60c of the housing 60 are formed in a step-like shape to have a small-diameter portion, a middle diameter portion, and a large-diameter portion in this order from the lower side upwards, corresponding to the three elements 50, 52, and 54.

The liquid sampling valve V₂ can assume two states in accordance with the rotation of the movable element 52. Namely, it can assume a first state in which the measuring passageways P₁ to P₄ of the movable element 52 are filled with a liquid sample introduced from outside and a second state in which the liquid sample having filled the measuring passageways P₁ to P₄ is transferred to outside.

In other words, the first state is a state in which the movable element 52 is at the position shown in Fig. 15 (Fig. 16), and the second state is a state in which the movable element 52 comes to the position shown in Fig. 18 by being rotated anti-clockwise by a central angle of 45° from the first state.

The operations of sucking and transferring a liquid sample and cleaning in the liquid sampling valve V₂ thus fabricated are basically the same as those for the liquid sampling valve V₁. Accordingly, the explanations thereof will be omitted here.

Since the liquid sampling valve V₂ of the present invention is constructed as shown above, it exhibits the following unexpected effect when compared with conventional liquid sampling valves.

Namely, the present invention makes it possible to dispose various passageways at the central portion of each of the three elements 50, 54, 52 instead of a shaft bore disposed in conventional sampling valves. Therefore, the costs for manufacturing the liquid sampling valves can be decreased by reducing the size of the elements 50, 54, 52 and utilizing the contact surfaces 50a, 54a, 52a, 52c, 52a, 52c effectively (i.e. more freedom in designing the passageway arrangement and the like).

Since the shaft bore which was disposed at the central portion of the elements in conventional liquid sampling valves is omitted, it is possible to disregard the inconveniencies of the operation at the central portion of the elements 50, 54, 52, thereby ensuring a long-term stability of the operation of the liquid sampling valve V₂.

Also, since no shaft bore is disposed, the present invention makes it possible to alleviate the measures such as cleaning the central portion for preventing liquid leakage and sticking.

In addition, the cut portions 57, 58, 59, 61, 62, 63 which are the concave engaging sections provided on the peripheral wall surfaces of the two fixed elements 50, 54 are engaged with the projections 66, 67, 68, 69, 70, 71 which are the convex engaging sections provided on the inner surfaces of the peripheral walls 60a, 60c, 60c of the housing 60. Therefore, the two fixed elements 50, 54 are firmly fixed within the housing 60.

Moreover, since the pressing member 56 including the cap 51 and the coil spring 53 allows close surface contact of the three elements 50, 54, 52 in the housing 60, it is possible to effectively eliminate a fear of liquid leakage or sticking on the contact surfaces 50a, 54a, 52a, 52c, 52a, 52c.

Further, in the inner surfaces of the peripheral walls 60a, 60c, 60c of the housing 60, there are disposed holding sections 60b, 60d, 60d formed in a step-like shape to have a small-diameter portion, a middle diameter portion, and a large-diameter portion in this order from the lower side upwards, corresponding to the three elements 50, 52, 54. Therefore, it is possible to fabricate the housing 60 easily by plastic molding, to reduce the fabrication costs, and to eliminate the fear of erring the order of housing the elements 50, 52, 54 in assembling the housing 60 and the three elements 50, 52, 54 into the liquid sampling valve V₂.

Also, the peripheral wall surface 52b of the movable element 52 is chamfered (bevelled) at its portions adjacent the contact surfaces 52a, 52a so that the portions may not come into contact with the contact surfaces 54a, 50a of the fixed elements 54, 50 or the inner surfaces of the peripheral walls 60a, 60c, 60c of the housing 60. In the movable element 52 thus fabricated, the area which is in contact with the inner surfaces of the peripheral walls 60a, 60c, 60c of the housing 60 is reduced when compared with a non-chamfered one, so that the movable element 52 rotates more easily while being interposed between the two fixed elements 54, 50.

When the liquid sampling valve V₂ and the liquid sampling valve V₁ are compared, it is understood that the sum of the areas of the four upper and lower contact surfaces 52a, 52c, 52a, 52c of the movable element 52 of the former is smaller than the sum of the areas of the two upper and lower contact surfaces 12a, 12a of the movable element 12 of the latter. Therefore, the movable element 52 of the former can be rotated with less rotative driving power than the movable element 12 of the latter.

Being constructed as shown above, the present invention exhibits the following effects.

Since the shaft bore which was disposed at the central portion of the fixed and movable elements in conventional liquid sampling valves is omitted, it is possible to dispose various passageways at the central portion of the fixed and movable elements. Therefore, the costs for manufacturing the liquid sampling valves can be decreased by reducing the size of the elements and utilizing the contact surfaces effectively (i.e. more freedom in designing the passageway arrangement and the like).

Also, since the shaft bore which was disposed at the central portion of the elements in conventional liquid sampling valves is omitted, it is possible to disregard the inconveniencies of the operation such as leakage of the sample liquid into the central portion of the elements, thereby ensuring a long-term stability of the operation of the liquid sampling valve.

Further, since no shaft bore is disposed, the present invention makes it possible to alleviate the measures such as cleaning the central portion for preventing liquid leakage and sticking.

If the fixed elements are arranged in a fixed manner by engaging with an engaging section provided on the inner surface of the peripheral wall of the housing, then the fixed elements are firmly fixed within the housing.

Moreover, if the pressing member comprises a cap fixed to the housing and an elastic member disposed between the cap and one of the fixed elements located nearer to the cap for pressing the fixed element onto the movable element, then it is possible to allow close surface contact between the two fixed elements and the one movable element in the housing, thereby effectively eliminating a fear of liquid leakage or sticking on the contact surfaces between the fixed elements and the movable element.

Also, if the housing comprises a holding section provided on the inner surface of the peripheral wall of the housing and having a stepwise increasing diameter in accordance with the order of housing the elements, then it is possible to fabricate the housing easily by plastic molding, to reduce the fabrication costs, and to eliminate the fear of erring the order of housing the elements in assembling the housing, the two fixed elements, and the one movable element into a liquid sampling valve.

Further, if the peripheral wall surface of the movable element is chamfered (bevelled) at its portions adjacent the contact surfaces so that the portions may not come into contact with the contact surfaces of the fixed elements or the inner surface of the peripheral wall of the housing, then the area which is in contact with the inner surface of the peripheral wall of the housing is reduced when compared with a non-chamfered movable element, so that the movable element. rotates more easily while being interposed between the two fixed elements.

Further, if an introducing passageway is provided at the central portion of one of the elements for introducing a liquid sample from outside and a discharging passageway is provided at the central portion of another of the elements for discharging the sample liquid to outside, then the costs for manufacturing the liquid sampling valves can be decreased by reducing the size of the elements and utilizing the contact surfaces effectively (i.e. more freedom in designing the passageway arrangement and the like).

Also, since an introducing passageway and a discharging passageway are provided instead of a shaft bore disposed at the central portion of the elements in conventional liquid sampling valves, the area of sample liquid flow can be concentrated at the central portion of the liquid sampling valve, thereby restricting the area for which the measures against inconveniencies such as liquid leakage and sticking should be taken, when compared with the conventional ones. This ensures a long-term stability of the operation of the liquid sampling valve.

Also, if one of the two fixed elements comprises an introducing passageway; the other of the two fixed elements comprises a discharging passageway; the movable element comprises a measuring passageway located at a position away from the central portion of the movable element for extracting a predetermined quantity of the introduced liquid sample; and the elements further comprise an introduction-side connecting passageway for connecting the introducing passageway with the measuring passageway and a discharge-side connecting passageway for connecting the measuring passageway with the discharging passageway, then it is possible to further reduce the size of the elements by disposing the measuring passageway as near to the central portion of the movable element as possible and by letting the lengths of the introduction-side connecting passageway and the discharge-side connecting passageway as short as possible.

Moreover, if the introduction-side connecting passageway is provided in a concave shape on the contact surface of one of the fixed elements and the discharge-side connecting passageway is provided in a concave shape on the contact surface of the other of the fixed elements, then it is possible to obtain a liquid sampling valve which is advantageous in view of costs by manufacturing the two fixed elements with ease and certainty.

Also, if a cleaning passageway is provided in each of the elements so as to surround the passageways through which the sample liquid is communicated, then it is possible to prevent the inconveniencies such as liquid leakage and sticking from being extended to the periphery of the elements by cleaning the various passageways -- the introducing passageway, the discharging passageway, the measuring passageway -- and the contact surfaces with the cleaning passageway.

Further, if a cleaning liquid introducing passageway is provided at a central portion of one of the two fixed elements; a land section and a pool section are provided in each of the two contact surfaces of the movable element; and a cleaning liquid discharging passageway is provided at a central portion of the other of the two fixed elements; one of the pool sections being in liquid communication with the cleaning liquid introducing passageway and the other of the pool sections being in liquid communication with the cleaning liquid discharging passageway, then the cleaning liquid is introduced into one of the fixed elements via the cleaning liquid introducing passageway of the fixed element and fills both of the pool sections of the movable element. Subsequently, the cleaning liquid cleans the contact surface between one of the fixed elements and the movable element, both of the land sections of the movable element, and the various passageways which are open to the land sections, and is discharged to outside via the cleaning liquid discharging passageway of the other of the fixed elements. Therefore, it is possible to clean the various passageways and the contact surfaces of the elements or the land sections of the movable element with certainty.

Also, if the movable element comprises a measuring passageway for extracting a predetermined quantity of the introduced sample, one end of the measuring passageway being open to one of the land sections and the other end of the measuring passageway being open to the other of the land sections, then it is possible to clean both ends of the measuring passageway effectively with the cleaning liquid pooled in both of the pool sections of the movable element.

## Claims

1. A liquid sampling valve (V1, V2) comprising:
- at least one fixed element (10, 14) having a contact surface (10a, 14a) and various liquid communication passageways; and
- at least one movable element (12) having a contact surface (12a) and various liquid communication passageways (Q1, Q2 ; S11, S21, S31, S41 ; S12, S22, S32, S42 ; S13, S23, S33, S43 ; a1, a2, a3, a4, a5 ; b1, b2, b3, b4, b5, b6, b7 ; c1, c2, c3, c4, c5, c6, c7 ; P1, P2, P3, P4 ; R1, R2), the movable element (12) being movable in such a manner that the contact surface (12a) of the movable element is in surface contact with the contact surface (10a, 14a) of the fixed element, the various liquid communication passageways (Q1, Q2 ; S11, S21, S31, S41 ; S12, S22, S32, S42 ; S13, S23, S33, S43 ; a1, a2, a3, a4, a5 ; b1, b2, b3, b4, b5, b6, b7 ; c1, c2, c3, c4, c5, c6, c7 ; P1, P2, P3, P4 ; R1, R2) of at least one of the fixed and movable elements including a measuring passageway (P1 ; P2 ; P3 ; P4) for extracting a predetermined quantity of a liquid sample, the fixed element (10, 14) and the movable element (12) being housed and held in a housing (20) for housing and holding the elements, and the fixed element (10, 14) and the movable element (12) being pressed by a pressing member (16) so that the elements are in close surface contact at their respective contact surfaces, **characterized in that** the pressing member (16) comprises a cap (11) fixed to the housing and an elastic member (13) disposed between the cap (11) and one of the fixed elements (10, 14) located nearer to the cap for pressing the fixed element (10, 14) onto the movable element (12).

2. A liquid sampling valve according to claim 1, **characterized in that** :
- each of the fixed element (10, 14) and the movable element (12) is a disk having a circular contact surface (10a, 14a, 12a) and a peripheral wall surface (10b, 14b, 12b) connected thereto, and
- the housing (20) is a circular cylinder having a peripheral wall (20a) whose inside surface is in contact with the peripheral wall surface (10b, 14b, 12b) of each of the fixed element (10, 14) and the movable element (12), the fixed element (10, 14) being coaxially housed in the housing (20) and fixedly held in place so that the fixed element (10, 14) is unrotatable, and the movable element (12) being coaxially housed in the housing and movably held in place so that the movable element (12) is rotatable within a predetermined angle range.

3. A liquid sampling valve according to claim 1, **characterized in that** :
- the fixed element (10, 14) comprises two disks each having a circular contact surface (10a, 14a) and a peripheral wall surface (10b, 14b) connected thereto,
- the movable element (12) is a disk having two circular contact surfaces (12a) and a peripheral wall surface (12b) connected thereto, the movable element being interposed between the two disks constituting the fixed element (10, 14), and
- the housing (20) is a circular cylinder having a peripheral wall (20a) whose inside surface is in contact with the peripheral wall surface (10b, 14b, 12b) of each of the fixed element (10, 14) and the movable element (12), the fixed element (10, 14) being coaxially housed in the housing (20) and fixedly held in place so that the fixed element (12) is unrotatable, and the movable element being coaxially housed in the housing and movably held in place so that the movable element is rotatable within a predetermined angle range.

4. A liquid sampling valve according to claim 1, **characterized in that** :
- each of the fixed and movable elements (10, 14, 12) is a disk having a peripheral wall surface (10b, 14b, 12b),
- the housing (20) is a circular cylinder having a peripheral wall (20b) whose inside surface is in contact with the peripheral wall surface (10b, 14b, 12b) of each of the fixed element (10, 14) and the movable element (12), and
- the fixed element (10, 14) is arranged in a fixed manner by engaging with an engaging section provided on the inner surface of the peripheral wall of the housing so that the fixed element cannot be rotated or shifted.

5. A liquid sampling valve according to claim 1, **characterized in that** :
- each of the fixed and movable elements (10, 14, 12) is a disk having a peripheral wall surface (10b, 14b, 12b),
- the housing (20) is a circular cylinder having a peripheral wall (20a) whose inside surface is in contact with the peripheral wall surface (10b, 14b, 12b) of each of the fixed element (10, 14) and the movable element (12), and
- the housing (20) comprises a holding section (20b) provided on the inner surface of the peripheral wall (20a) of the housing (20) and having a stepwise increasing diameter in accordance with the order of housing the elements.

6. A liquid sampling valve according to claim 1, **characterized in that** :
- each of the fixed and movable elements (10, 14, 12) is a disk having a peripheral wall surface (10b, 14b, 12b),
- the housing (20) is a circular cylinder having a peripheral wall (20a) whose inside surface is in contact with the peripheral wall surface (10b, 14b, 12b) of each of the fixed element (10, 14) and the movable element (12), and
- the peripheral wall surface (12b) of the movable element (12) is chamfered at portions thereof adjacent the contact surfaces (12a) so that the portions may not come into contact with the contact surfaces (10a, 14a) of the fixed elements (14, 10) or the inner surface of the peripheral wall (20a) of the housing (20).

7. A liquid sampling valve according to claim 1, **characterized in that** :
- one of the fixed and movable elements (10, 14, 12) comprises an introducing passageway (Q1) disposed at the central portion thereof, the introducing passageway (Q1) being one of the liquid communication passageways and serving for introducing a liquid sample, and
- another of the movable and fixed elements (10, 14, 12) comprises a discharging passageway (R1) disposed at the central portion thereof, the discharging passageway being one of the liquid communication passageways and serving for discharging the sample liquid.

8. A liquid sampling valve according to claim 2, **characterized in that** :
- the fixed element (10, 14) or the movable element (12) comprises an introducing passageway (Q1 ; R1) disposed at the central portion thereof, the introducing passageway being one of the liquid communication passageways and serving for introducing a liquid sample, and
- the movable element (12) or the fixed element (10, 14) comprises a discharging passageway (R1 ; Q1) disposed at the central portion thereof, the discharging passageway being one of the liquid communication passageways and serving for discharging the sample liquid.

9. A liquid sampling valve according to claim 3, **characterized in that** :
- one of the two fixed elements (10, 14) comprises an introducing passageway (Q1) disposed at the central portion thereof, the introducing passageway being one of the liquid communication passageways and serving for introducing a liquid sample,
- the other of the two fixed elements (10, 14) comprises a discharging passageway (R1) disposed at the central portion thereof, the discharging passageway being one of the liquid communication passageways and serving for discharging the sample liquid,
- the movable element (12) includes at least one of the measuring passageways (P1, P2, P3, P4), the measuring passageway of the movable element being located at a position away from the central portion of the movable element,
- one of the fixed elements (10, 14) further comprises an introduction-side connecting passageway (U1) for connecting the introducing passageway (Q1) with the measuring passageway (P1, P2, P3, P4), the introduction-side connecting passageway being one of the liquid communication passageways, and
- the other of the fixed elements (10, 14) further comprises a discharge-side connecting passageway (U4) for connecting the measuring passageway (P1, P2, P3, P4) with the discharging passageway (R1), the discharge-side connecting passageway being one of the liquid communication passageways.

10. A liquid sampling valve according to claim 9, **characterized in that** :
- the introduction-side connecting passageway (U1) is provided in a concave shape on the contact surface of one of the fixed elements, and
- the discharge-side connecting passageway (U4) is provided in a concave shape on the contact surface of the other of the fixed elements.

11. A liquid sampling valve according to claim 1, **characterized in that** a plurality of cleaning passageways (a1, a2, a3, a4, a5 ; b1, b2, b3, b4, b5, b6, b7 ; c1, c2, c3, c4, c5, c6, c7) are provided in each of the fixed element (10, 14) and the movable element (12) so as to surround the measuring passageways (P1, P2, P3, P4), each of the cleaning passageways being one of the liquid communication passageways.

12. A liquid sampling valve according to claim 1, **characterized in that** one of the fixed and movable elements (10, 14, 12) having a surface contact with each other comprises a land section and a pool section disposed in the contact surface thereof, the land section serving to have a surface contact with the contact surface of the other element and the pool section serving to pool the cleaning liquid while surrounding the land section.

13. A liquid sampling valve according to claim 3, **characterized in that** :
- one of the two fixed elements (10, 14) comprises a cleaning liquid introducing passageway (Q1) disposed at a central portion thereof for introducing a cleaning liquid, the cleaning liquid introducing passageway being one of the liquid communication passageways,
- the other of the two fixed elements (10, 14) comprises a cleaning liquid discharging passageway (R1) disposed at a central portion thereof for discharging the cleaning liquid, the cleaning liquid discharging passageway being one of the liquid communication passageways, and
- the movable element (12) comprises a land section and a pool section disposed in the two contact surfaces thereof, the land section serving to have a surface contact with the contact surface of each of the two fixed elements, and the pool section serving to pool the cleaning liquid while surrounding the land section, one of the pool sections being in liquid communication with the cleaning liquid introducing passageway, and the other of the pool sections being in liquid communication with the cleaning liquid discharging passageway.

14. A liquid sampling valve according to claim 13, **characterized in that** the movable element (12) includes at least one of the measuring passageways (P1, P2, P3, P4), one end of the measuring passageway of the movable element being open to one of the land sections, and the other end of the measuring passageway of the movable element being open to the other of the land sections.

## Patentansprüche

1. Flüssigkeitsprobenentnahmeventil (V1, V2) aufweisend:
- zumindest ein fixiertes Element (10, 14) mit einer Kontaktoberfläche (10a, 14a) und verschiedenen Flüssigkeitsverbindungskanälen; und
- zumindest ein bewegliches Element (12), das eine Kontaktoberfläche (12a) und verschiedene Flüssigkeitsverbindungskanäle (Q1, Q2; S11, S21, S31, S41; S12, S22, S32, S42; S13, S23, S33, S43; a1, a2, a3, a4, a5; b1, b2, b3, b4, b5, b6, b7; c1, c2, c3, c4, c5, c6, c7; P1, P2, P3, P4; R1, R2) aufweist, wobei das bewegliche Element (12) derart beweglich ist, daß die Kontaktoberfläche (12a) des beweglichen Elements in Oberflächenkontakt mit der Kontaktoberfläche (10a, 14a) des fixierten Elements steht, wobei die verschiedenen Flüssigkeitsverbindungskahalen (Q1, Q2; S11, S21, S31, S41; S12, S22, S32, S42; S13, S23, S33, S43; a1, a2, a3, a4, a5; b1, b2, b3, b4, b5, b6, b7; c1, c2, c3, c4, c5, c6, c7; P1, P2, P3, P4; R1, R2) von zumindest einem der fixierten und beweglichen Elemente einen Meßkanal (P1; P2; P3; P4) zum Extrahieren einer vorbestimmten Menge einer Flüssigkeitsprobe enthalten, wobei das fixierte Element (10, 14) und das bewegliche Element (12) in einem Gehäuse (20) zum Aufnehmen und Halten der Elemente untergebracht sind und gehalten werden, und wobei das fixierte Element (10, 14) und das bewegliche Element (12) durch ein Preßteil (16) derart gepreßt werden, daß die Elemente in einem engen Oberflächenkontakt mit ihren jeweiligen Kontaktoberflächen stehen, **dadurch gekennzeichnet, daß** das Preßteil (16) eine an dem Gehäuse fixierte Kappe (11) sowie ein elastisches Teil (13) aufweist, das zwischen der Kappe (11) und einem der fixierten Elemente (10, 14), welches näher bei der Kappe angeordnet ist, zum Pressen des fixierten Elements (10,14) auf das bewegliche Element (12) angeordnet ist.

2. Flüssigkeitsprobenentnahmeventil gemäß Anspruch 1, **dadurch gekennzeichnet, daß** :
- jedes fixierte Element (10, 14) und das bewegliche Element (12) eine Scheibe sind, die eine kreisförmige Kontaktoberfläche (10a, 14a, 12a) und eine damit verbundene Umfangswandoberfläche (10b, 14b, 12b) aufweisen, und
- das Gehäuse (20) ein kreisförmiger Zylinder ist, der eine Umfangswand (20a) aufweist, deren Innenoberfläche in Kontakt mit der Umfangswandoberfläche (10b, 14b, 12b) jedes fixierten Elements (10, 14) und des beweglichen Elements (12) steht, wobei das fixierte Element (10, 14) koaxial in dem Gehäuse (20) aufgenommen ist und derart fixiert gehalten wird, daß das fixierte Element (10, 14) nicht drehbar ist und wobei das bewegliche Element (12) in dem Gehäuse koaxial aufgenommen ist und derart beweglich gehalten wird, daß das bewegliche Element (12) innerhalb eines vorbestimmten Winkelbereichs drehbar ist.

3. Flüssigkeitsprobenentnahmeventil gemäß Anspruch 1, **dadurch gekennzeichnet, daß**:
- das fixierte Element (10, 14) zwei Scheiben mit jeweils einer kreisförmigen Kontaktoberfläche (10a, 14a) und einer damit verbundenen Umfangswandoberfläche (10b, 14b) aufweist,
- das bewegliche Element (12) eine Scheibe mit zwei kreisförmigen Kontaktoberflächen (12a) und einer damit verbundenen Umfangswandoberfläche (12b) ist, wobei das bewegliche Element zwischen den zwei Scheiben, die das fixierte Element (10, 14) bilden, angeordnet ist, und
- das Gehäuse (20) ein kreisförmiger Zylinder mit einer Umfangswand (20a) ist, deren Innenoberfläche in Kontakt mit der Umfangswandoberfläche (10b, 14b, 12b) jedes fixierten Elements (10, 14) und des beweglichen Elements (12) steht, wobei das fixierte Element (10, 14) in dem Gehäuse (20) koaxial aufgenommen ist und derart fixiert gehalten wird, daß das fixierte Element (12) nicht drehbar ist, und wobei das bewegliche Element in dem Gehäuse koaxial aufgenommen ist und derart beweglich gehalten wird, daß das bewegliche Element innerhalb eines vorbestimmten Winkelbereichs drehbar ist.

4. Flüssigkeitsprobenentnahmeventil gemäß Anspruch 1, **dadurch gekennzeichnet, daß**:
- alle fixierten und beweglichen Elemente (10, 14, 12) eine Scheibe mit einer Umfangswandoberfläche (10b, 14b, 12b) sind,
- das Gehäuse (20) ein kreisförmiger Zylinder mit einer Umfangswand (20b) ist, deren Innenoberfläche in Kontakt mit der Umfangswandoberfläche (10b, 14b, 12b) jedes fixierten Elements (10, 14) und des beweglichen Elements (12) steht, und
- das fixierte Element (10, 14) durch Ineingriffstehen mit einem Eingriffsabschnitt, der an einer Innenoberfläche der Umfangswand des Gehäuses vorgesehen ist, in einer fixierten Art und Weise derart angeordnet ist, daß das fixierte Element nicht gedreht oder verschoben werden kann.

5. Flüssigkeitsprobenentnahmeventil gemäß Anspruch 1, **dadurch gekennzeichnet, daß**:
- alle fixierten und beweglichen Elemente (10, 14, 12) eine Scheibe mit einer Umfangswandoberfläche (10b, 14b, 12b) sind,
- das Gehäuse (20) ein kreisförmiger Zylinder mit einer Umfangswand (20a) ist, deren Innenoberfläche in Kontakt mit der Umfangswandoberfläche (10b, 14b, 12b) jedes fixierten Elements (10, 14) und des beweglichen Elements (12) steht, und
- das Gehäuse (20) einen Halteabschnitt (20b) aufweist, der mit einer Innenoberfläche der Umfangswand (20a) des Gehäuses (20) vorgesehen ist und einen stufenförmig vergrößerten Durchmesser in Übereinstimmung mit der Reihenfolge der aufgenommenen Elemente aufweist.

6. Flüssigkeitsprobenentnahmeventil gemäß Anspruch 1, **dadurch gekennzeichnet, daß**:
- alle fixierten und beweglichen Elemente (10, 14, 12) eine Scheibe mit einer Umfangswandoberfläche (10b, 14b, 12b) sind,
- das Gehäuse (20) ein kreisförmiger Zylinder mit einer Umfangswand (20a) ist, deren Innenoberfläche in Kontakt mit der Umfangswandoberfläche (10b, 14b, 12b) jedes fixierten Elements (10, 14) und des beweglichen Elements (12) steht, und
- die Umfangswandoberfläche (12b) des beweglichen Elements (12) an Abschnitten davon, die benachbart zu den Kontaktoberflächen (12a) sind, derart abgeschrägt ist, daß die Abschnitte nicht mit den Kontaktoberflächen (10a, 14a) der fixierten Elemente (14, 10) oder der Innenoberfläche der Umfangswand (20a) des Gehäuses (20) in Kontakt kommen können.

7. Flüssigkeitsprobenentnahmeventil gemäß Anspruch 1, **dadurch gekennzeichnet, daß**:
- eines der fixierten und beweglichen Elemente (10, 14, 12) einen an seinem Zentralabschnitt angeordneten Einführkanal (Q1) aufweist, wobei der Einführkanal (Q1) einer der Flüssigkeitsverbindungskanäle ist und zum Einführen einer Flüssigkeitsprobe dient, und
- ein anderes der beweglichen und fixierten Elemente (10, 14, 12) einen an seinem Zentralabschnitt angeordneten Auslaßkanal (R1) aufweist, wobei der Auslaßkanal einer der Flüssigkeitsverbindungskanäle ist und zum Auslassen der Flüssigkeitsprobe dient.

8. Flüssigkeitsprobenentnahmeventil gemäß Anspruch 2, **dadurch gekennzeichnet, daß**:
- das fixierte Element (10, 14) oder das bewegliche Element (12) einen an seinem Zentralabschnitt angeordneten Einführkanal (Q1; R1) aufweist, wobei der Einführkanal einer der Flüssigkeitsverbindungskanäle ist und zum Einführen einer Flüssigkeitsprobe dient, und
- das bewegliche Element (12) oder das fixierte Element (10, 14) einen an seinem Mittelabschnitt angeordneten Auslaßkanal (R1; Q1) aufweist, wobei der Auslaßkanal einer der Flüssigkeitsverbindungskanäle ist und zum Auslassen der Probeflüssigkeit dient.

9. Flüssigkeitsprobenentnahmeventil gemäß Anspruch 3, **dadurch gekennzeichnet, daß**:
- eines der zwei fixierten Elemente (10, 14) einen an seinem Zentralabschnitt angeordneten Einlaßkanal (Q1) aufweist, wobei der Einlaßkanal einer der Flüssigkeitsverbindungskanäle ist und zum Einführen einer Flüssigkeitsprobe dient,
- das andere der zwei fixierten Elemente (10, 14) einen an seinem Zentralabschnitt angeordneten Auslaßkanal (R1) aufweist, wobei der Auslaßkanal einer der Flüssigkeitsverbindungskanäle ist und zum Auslassen der Probeflüssigkeit dient,
- das bewegliche Element (12) zumindest einen der Meßkanäle (P1, P2, P3, P4) enthält, wobei der Meßkanal des beweglichen Elements an einer Position angeordnet ist, die von dem Zentralabschnitt des beweglichen Elements entfernt ist,
- eines der fixierten Elemente (10, 14) ferner einen einführungsseitigen Verbindungskanal (U1) zum Verbinden des Einführkanals (Q1) mit dem Meßkanal (P1, P2, P3, P4) aufweist, wobei der einführungsseitige Verbindungskanal einer der Flüssigkeitsverbindungskanäle ist, und
- das andere der fixierten Elemente (10, 14) ferner einen auslaßseitigen Verbindungskanal (U4) zum Verbinden des Meßkanals (P1, P, P3, P4) mit dem Auslaßkanal (R1) aufweist, wobei der auslaßseitige Verbindungskanal einer der Flüssigkeitsverbindungskanäle ist.

10. Flüssigkeitsprobenentnahmeventil gemäß Anspruch 9, **dadurch gekennzeichnet, daß**:
- der einführungsseitige Verbindungskanal (U1) in einer konkaven Form auf der Kontaktoberfläche eines der fixierten Elemente vorgesehen ist, und
- der auslaßseitige Verbindungskanal (U4) in einer konkaven Form auf der Kontaktoberfläche des anderen fixierten Elements vorgesehen ist.

11. Flüssigkeitsprobenentnahmeventil gemäß Anspruch 1, **dadurch gekennzeichnet, daß** eine Vielzahl von Reinigungskanälen (a1, a2, a3, a4, a5; b1, b2, b3, b4, b5, b6, b7; c1, c2, c3, c4, c5, c6, c7) in jedem der fixierten Elemente (10, 14) und dem beweglichen Element (12) vorgesehen sind, um so die Meßkanäle (P1, P2, P3, P4) zu umgeben, wobei jeder der Reinigungskanäle einer der Flüssigkeitsverbindungskanäle ist.

12. Flüssigkeitsprobenentnahmeventil gemäß Anspruch 1, **dadurch gekennzeichnet, daß** eines der fixierten und beweglichen Elemente (10, 14, 12), das in Oberflächenkontakt mit einem anderen steht, einen Ausladeabschnitt und einen Sammelabschnitt aufweist, die in deren Kontaktoberfläche angeordnet sind, wobei der Ausladeabschnitt dazu dient, einen Oberflächenkontakt mit der Kontaktoberfläche des anderen Elements aufzuweisen, und wobei der Sammelabschnitt zum Sammeln der Reinigungsflüssigkeit dient, während er den Ausladeabschnitt umgibt.

13. Flüssigkeitsprobenentnahmeventil gemäß Anspruch 3, **dadurch gekennzeichnet, daß**:
- eines der zwei fixierten Elemente (10, 14) einen an seinem Zentralabschnitt angeordneten Reinigungsflüssigkeitseinführkanal (Q1) zum Einführen einer Reinigungsflüssigkeit aufweist, wobei der Reinigungsflüssigkeitseinführkanal einer der Flüssigkeitsverbindungskanäle ist,
- das andere der zwei fixierten Elemente (10, 14) einen an seinem Zentralabschnitt angeordneten Reinigungsflüssigkeitsauslaßkanal (R1) zum Auslassen der Reinigungsflüssigkeit aufweist, wobei der Reinigungsflüssigkeitsauslaßkanal einer der Flüssigkeitsverbindungskanäle ist, und
- das bewegliche Element (12) einen Ausladeabschnitt und einen Sammelabschnitt aufweist, die an dessen zwei Kontaktoberflächen angeordnet Kontaktoberfläche jedes der zwei fixierten Elemente aufzuweisen, und wobei der Sammelabschnitt dazu dient, die Reinigungsflüssigkeit zu sammeln, während er den Ausladeabschnitt umgibt, wobei einer der Sammelabschnitte mit dem Reinigungsflüssigkeitseinführkanal in einer Flüssigkeitsverbindung steht, und der andere der Sammelabschnitte mit dem Reinigungsflüssigkeitsauslaßkanal in Flüssigkeitsverbindung steht.

14. Flüssigkeitsprobenentnahmeventil gemäß Anspruch 13, **dadurch gekennzeichnet, daß** das bewegliche Element (12) zumindest einen der Meßkanäle (P1, P2, P3, P4) enthält, wobei ein Ende des Meßkanals des beweglichen Elements zu einem der Auslaßabschnitte hin geöffnet ist, und wobei das andere Ende des Meßkanals des beweglichen Elements zu den anderen Ausladeabschnitten hin geöffnet ist.

## Revendications

1. Valve d'échantillonnage de liquide (V1, V2) comprenant :
- au moins un élément fixe (10, 14) ayant une surface de contact (10a, 14a) et divers passages de communication des liquides ; et
- au moins un élément déplaçable (12) ayant une surface de contact (12a) et divers passages de communication des liquides (Q1, Q2 ; S11, S21, S31, S41 ; S12, S22, S32, S42 ; S13, S23, S33, S43 ; a1, a2, a3, a4, a5 ; b1, b2, b3, b4, b5, b6, b7 ; c1, c2, c3, c4, c5, c6, c7 ; P1, P2, P3, P4 ; R1, R2), l'élément déplaçable (12) étant déplaçable de telle manière que la surface de contact (12a) de l'élément déplaçable est en contact au niveau de sa surface avec la surface de contact (10a, 14a) de l'élément fixe, les divers passages de communication des liquides (Q1, Q2 ; S11, S21, S31, S41 ; S12, S22, S32, S42 ; S13, S23, S33, S43 ; a1, a2, a3, a4, a5 ; b1, b2, b3, b4, b5, b6, b7 ; c1, c2, c3, c4, c5, c6, c7 ; P1, P2, P3, P4 ; R1, R2) d'au moins l'un des éléments fixe ou déplaçable comprenant un passage de mesurage (P1 ; P2 ; P3 ; P4) pour extraire une quantité prédéterminée d'un échantillon de liquide, l'élément fixe (10, 14) et l'élément déplaçable (12) étant logés et maintenus dans un logement (20) destiné à loger et à maintenir les éléments, et l'élément fixe (10, 14) et l'élément déplaçable (12) étant comprimés par un élément de compression (16) de sorte que les éléments sont en contact de surface proche au niveau de leurs surfaces de contact respectives, **caractérisée en ce que** l'élément de compression (16) comprend un bouchon (11) fixé au logement et un élément élastique (13) placé entre le bouchon (11) et l'un des éléments fixes (10, 14) situés plus près du bouchon pour comprimer l'élément fixe (10, 14) sur l'élément déplaçable (12).

2. Valve d'échantillonnage de liquide selon la revendication 1, **caractérisée en ce que** :
- l'élément fixe (10, 14) et l'élément déplaçable (12) sont chacun un disque ayant une surface de contact circulaire (10a, 14a, 12a) et une surface de paroi périphérique (10b, 14b, 12b) reliée à celle-ci, et
- le logement (20) est un cylindre circulaire ayant une paroi périphérique (20a) dont la surface interne est en contact avec la surface de paroi périphérique (10b, 14b, 12b) de l'élément fixe (10, 14) et de l'élément déplaçable (12), l'élément fixe (10, 14) étant logé coaxialement dans le logement (20) et maintenu fixement en place de sorte qu'on ne peut pas faire tourner l'élément fixe (10, 14), et l'élément déplaçable (12) étant coaxialement logé dans le logement et maintenu en place de manière déplaçable de sorte qu'on peut faire tourner l'élément déplaçable (12) dans une gamme d'angles prédéterminée.

3. Valve d'échantillonnage de liquide selon la revendication 1, **caractérisée en ce que** :
- l'élément fixe (10, 14) comprend deux disques ayant chacun une surface de contact circulaire (10a, 14a) et une surface de paroi périphérique (10b, 14b) reliée à celle-ci,
- l'élément déplaçable (12) est un disque ayant deux surfaces de contact circulaires (12a) et une surface de paroi périphérique (12b) reliée à celle-ci, l'élément déplaçable étant intercalé entre les deux disques constituant l'élément fixe (10, 14), et
- le logement (20) est un cylindre circulaire ayant une paroi périphérique (20a) dont la surface interne est en contact avec la surface de paroi périphérique (10b, 14b, 12b) de l'élément fixe (10, 14) et de l'élément déplaçable (12), l'élément fixe (10, 14) étant coaxialement logé dans le logement (20) et maintenu fixement en place de sorte qu'on ne peut pas faire tourner l'élément fixe (12), et l'élément déplaçable étant coaxialement logé dans le logement et maintenu en place de manière déplaçable de sorte qu'on peut faire tourner l'élément déplaçable dans une gamme d'angle prédéterminée.

4. Valve d'échantillonnage de liquide selon la revendication 1, **caractérisée en ce que** :
- l'élément fixe et l'élément déplaçable (10, 14, 12) sont chacun un disque ayant une surface de paroi périphérique (10b, 14b, 12b),
- le logement (20) est un cylindre circulaire ayant une paroi périphérique (20b) dont la surface interne est en contact avec la surface de paroi périphérique (10b, 14b, 12b) de l'élément fixe (10, 14) et de l'élément déplaçable (12), et
- l'élément fixe (10, 14) est disposé d'une manière fixe par engagement dans une section d'engagement prévue sur la surface interne de la paroi périphérique du logement de sorte qu'on ne peut pas faire tourner ni déplacer l'élément fixe.

5. Valve d'échantillonnage de liquide selon la revendication 1, **caractérisée en ce que** :
- l'élément fixe et l'élément déplaçable (10, 14, 12) sont chacun un disque ayant une surface de paroi périphérique (10b, 14b, 12b),
- le logement (20) est un cylindre circulaire ayant une paroi périphérique (20a) dont la surface interne est en contact avec la surface de paroi périphérique (10b, 14b, 12b) de l'élément fixe (10, 14) et de l'élément déplaçable (12), et
- le logement (20) comprend une section de maintien (20b) prévue sur la surface interne de la paroi périphérique (20a) du logement (20) et ayant un diamètre augmentant par étapes selon l'ordre de logement des éléments.

6. Valve d'échantillonnage de liquide selon la revendication 1, **caractérisée en ce que** :
- l'élément fixe et l'élément déplaçable (10, 14, 12) sont chacun un disque ayant une surface de paroi périphérique (10b, 14b, 12b),
- le logement (20) est un cylindre circulaire ayant une paroi périphérique (20a) dont la surface interne est en contact avec la surface de paroi périphérique (10b, 14b, 12b) de l'élément fixe (10, 14) et de l'élément déplaçable (12), et
- la surface de paroi périphérique (12b) de l'élément déplaçable (12) est biseautée en ses parties adjacentes aux surfaces de contact (12a) de sorte que les parties ne peuvent pas entrer en contact avec les surfaces de contact (10a, 14a) des éléments fixes (14, 10) ou avec la surface interne de la paroi périphérique (20a) du logement (20).

7. Valve d'échantillonnage de liquide selon la revendication 1, **caractérisée en ce que** :
- l'un ou l'autre de l'élément fixe ou de l'élément déplaçable (10, 14, 12) comprend un passage d'introduction (Q1) disposé au niveau de la partie centrale de celui-ci, le passage d'introduction (Q1) étant l'un des passages de communication des liquides et servant à introduire un échantillon de liquide, et
- un autre de l'élément déplaçable ou de l'élément fixe (10, 14, 12) comprend un passage d'évacuation (R1) disposé au niveau de la partie centrale de celui-ci, le passage d'évacuation étant l'un des passages de communication des liquides et servant à évacuer le liquide d'échantillonnage.

8. Valve d'échantillonnage de liquide selon la revendication 2, **caractérisée en ce que** :
- l'élément fixe (10, 14) ou l'élément déplaçable (12) comprend un passage d'introduction (Q1 ; R1) disposé au niveau de la partie centrale de celui-ci, le passage d'introduction étant l'un des passages de communication des liquides et servant à introduire un échantillon de liquide, et
- l'élément déplaçable (12) ou l'élément fixe (10, 14) comprend un passage d'évacuation (R1 ; Q1) disposé au niveau de la partie centrale de celui-ci, le passage d'évacuation étant l'un des passages de communication des liquides et servant à évacuer le liquide d'échantillonnage.

9. Valve d'échantillonnage de liquide selon la revendication 3, **caractérisée en ce que** :
- l'un des deux éléments fixes (10, 14) comprend un passage d'introduction (Q1) disposé au niveau de la partie centrale de celui-ci, le passage d'introduction étant l'un des passages de communication des liquides et servant à introduire un échantillon de liquide,
- l'autre des deux éléments fixes (10, 14) comprend un passage d'évacuation (R1) disposé au niveau de la partie centrale de celui-ci, le passage d'évacuation étant l'un des passages de communication des liquides et servant à évacuer le liquide d'échantillonnage,
- l'élément déplaçable (12) comprend au moins l'un des passages de mesurage (P1 ; P2 ; P3 ; P4), le passage de mesurage de l'élément déplaçable étant situé à un emplacement éloigné de la partie centrale de l'élément déplaçable,
- l'un des éléments fixes (10, 14) comprend en outre un passage de connexion latérale d'introduction (U1) pour relier le passage d'introduction (Q1) avec le passage de mesurage (P1, P2, P3, P4), le passage de connexion latérale d'introduction étant l'un des passages de communication des liquides, et
- l'autre des éléments fixes (10, 14) comprend en outre un passage de connexion latéral d'évacuation (U4) pour relier le passage de mesurage (P1, P2, P3, P4) au passage d'évacuation (R1), le passage de connexion latéral d'évacuation étant l'un des passages de communication des liquides.

10. Valve d'échantillonnage de liquide selon la revendication 9, **caractérisée en ce que** :
- le passage de connexion latéral d'introduction (U1) présente une forme concave sur la surface de contact de l'un des éléments fixes, et
- le passage de connexion latéral d'évacuation (U4) présente une forme concave sur la surface de contact de l'autre des éléments fixes.

11. Valve d'échantillonnage de liquide selon la revendication 1, **caractérisée en ce qu'**une pluralité de passages de nettoyage (a1, a2, a3, a4, a5 ; b1, b2, b3, b4, b5, b6, b7 ; c1, c2, c3, c4, c5, c6, c7) est prévue dans l'élément fixe (10, 14) et dans l'élément déplaçable (12) afin d'entourer les passages de mesurage (P1, P2, P3, P4), chacun des passages de nettoyage étant l'un des passages de communication des liquides.

12. Valve d'échantillonnage de liquide selon la revendication 1, **caractérisée en ce que** l'un ou l'autre de l'élément fixe ou de l'élément déplaçable (10, 14, 12) ayant une surface de contact mutuelle comprend une zone d'appui et une zone de tirage disposées dans la surface de contact de celui-ci, la zone d'appui servant à avoir une surface de contact avec la surface de contact de l'autre élément et la zone de tirage servant à tirer le liquide de nettoyage tout en entourant la zone d'appui.

13. Valve d'échantillonnage de liquide selon la revendication 3, **caractérisée en ce que** :
- l'un des deux éléments fixes (10, 14) comprend un passage d'introduction de liquide de nettoyage (Q1) disposé dans une partie centrale de celui-ci pour introduire un liquide de nettoyage, le passage d'introduction de liquide de nettoyage étant l'un des passages de communication des liquides,
- l'autre des deux éléments fixes (10, 14) comprend un passage d'évacuation du liquide de nettoyage (R1) disposé dans une partie centrale de celui-ci pour évacuer le liquide de nettoyage, le passage d'évacuation de liquide de nettoyage étant l'un des passages de communication des liquides, et
- l'élément déplaçable (12) comprend une zone d'appui et une zone de tirage disposées dans les deux surfaces de contact de celui-ci, la zone d'appui servant à avoir un contact de surface avec la surface de contact de chacun des éléments fixes, et la zone de tirage servant à tirer le liquide de nettoyage tout en entourant la zone d'appui, l'une des zones de tirage étant en communication liquide avec le passage d'introduction du liquide de nettoyage, et l'autre des zones de tirage étant en communication liquide avec le passage d'évacuation du liquide de nettoyage.

14. Valve d'échantillonnage de liquide selon la revendication 13, **caractérisée en ce que** l'élément déplaçable (12) inclut au moins l'un des passages de mesurage (P1, P2, P3, P4), une extrémité du passage de mesurage de l'élément déplaçable étant ouverte à l'une des zones d'appui, et l'autre extrémité du passage de mesurage de l'élément déplaçable étant ouverte à l'autre des zones d'appui.
